# EUROPÄISCHE PATENTANMELDUNG

(11) **EP 4 134 641 A1**
(43) Veröffentlichungstag der Anmeldung: **15.02.2023**
(21) Anmeldenummer: 22189234.2
(22) Anmeldetag: 08.08.2022
(51) Int. Cl.: G01J 3/02, G01J 1/58

(54) **OPTOELEKTRONISCHER DETEKTOR, OPTOELEKTRONISCHE DETEKTORVORRICHTUNG UND EIN VERFAHREN ZUM DETEKTIEREN EINER ELEKTROMAGNETISCHEN STRAHLUNG**

(30) Priorität: 10.08.2021 DE 102021120754
(71) Anmelder: Technische Universität Dresden, 01069 Dresden (DE)
(72) Erfinder: KIRCH, Anton, 01099 Dresden (DE); BENDUHN, Johannes, 01309 Dresden (DE); REINEKE, Sebastian, 01099 Dresden (DE)
(74) Vertreter: Viering, Jentschura & Partner mbB Patent- und Rechtsanwälte

(57) **Zusammenfassung**

Es werden ein optoelektronischer Detektor, eine optoelektronische Detektorvorrichtung und ein Verfahren zum Detektieren einer elektromagnetischen Strahlung bereitgestellt, der optoelektronische Detektor (100) weist auf: mindestens ein Funktionselement (110), welches eingerichtet ist, eine zu detektierende elektromagnetische Strahlung (131) zu absorbieren und eine Lumineszenz-Strahlung (132) derart zu emittieren, dass eine Intensität der emittierten Lumineszenz-Strahlung (132) ein zeitabhängiges Abklingverhalten aufweist, und dass das zeitabhängige Abklingverhalten eine spektrale Eigenschaft einer zu detektierenden elektromagnetischen Strahlung (131) repräsentiert; und eine optoelektronische Detektoreinheit (120), welche eingerichtet ist das zeitabhängige Abklingverhalten der Intensität der von dem Funktionselement (110) emittierten Lumineszenz-Strahlung (132) zu ermitteln zum Ermitteln der spektralen Eigenschaft einer zu detektierenden elektromagnetischen Strahlung (131) und/oder zum Ermitteln eines Emissionsmaterials, welches eine zu detektierende elektromagnetische Strahlung (131) emittiert.

## Beschreibung

Verschiedene Ausführungsformen betreffen einen optoelektronischen Detektor, eine optoelektronische Detektorvorrichtung und ein Verfahren zum Detektieren einer elektromagnetischen Strahlung.

Im Allgemeinen kann das Messen einer Wellenlänge von elektromagnetischer Strahlung in der Industrie, Forschung und Sicherheitstechnik wichtig sein. Beispielsweise kann elektromagnetische Strahlung (z.B. emittiert von aktiv oder passiv lumineszierenden Stoffen) zum Plagiatsschutz, zur Qualitätssicherung und/oder zur Produktidentifizierung verwendet werden.

Beispielsweise kann es für eine Charakterisierung von monochromatischen oder schmalbandigen Lichtquellen (z.B. von Lasern) notwendig sein, die Wellenlänge einer Emission der Lichtquelle zu ermitteln. Herkömmlicherweise können Spektrometer zum Bestimmen der Wellenlänge(n) verwendet werden. Der hierin beschriebene optoelektronische Detektor kann die Funktion eines Spektrometers übernehmen allerdings technisch einfacher und kostengünstiger.

Beispielsweise können lumineszierende Stoffe Lumineszenz-Strahlung emittieren, mittels derer ein jeweiliger lumineszierender Stoff identifiziert werden kann. Somit können beispielsweise bestimmte lumineszierende Stoffe mit einer jeweiligen bestimmten Lumineszenz-Strahlung für Sicherheitsmerkmale (z.B. von Geldscheinen oder Ausweisdokumenten) verwendet werden, um die Fälschungssicherheit der Sicherheitsmerkmale zu erhöhen. Die lumineszierenden Stoffe des Sicherheitsmerkmals können zum Lumineszieren angeregt werden und die jeweilige Lumineszenz-Strahlung kann detektiert werden. Basierend auf dem Wellenlängenspektrum der detektierten Lumineszenz-Strahlung kann der lumineszierende Stoff oder zumindest ein Vorhandensein des lumineszierenden Stoffes und somit des Sicherheitsmerkmals ermittelt werden. Auch dafür können herkömmlicherweise Spektrometer verwendet werden.

Herkömmlicherweise können Spektrometer optische Elemente wie beispielsweise Prismen oder Gitter aufweisen zum Analysieren einer jeweiligen zu untersuchenden (z.B. emittierten) Strahlung. Die einzelnen Bestandteile eines Spektrometers können teuer, schwer und teilweise auch sehr groß sein. Daher kann aufgrund dieser Komponenten das Spektrometer und damit das gesamte Untersuchungsverfahren sowohl teuer als auch unhandlich werden.

Gemäß verschiedenen Aspekten kann der optoelektronische Detektor eingerichtet sein, eine spektrale Antwort eines Farbstoffes zu identifizieren und/oder zu authentifizieren. Gemäß verschiedenen Aspekten ermöglicht der optoelektronische Detektor eine Echtheitsidentifikation mittels einer Ja/Nein Antwort.

Gemäß verschiedenen Aspekten wird ein optoelektronischer Detektor bereitgestellt, der verwendet werden kann, um eine Emissionswellenlänge von monochromatischen Lichtquellen zu ermitteln oder zu prüfen.

Gemäß verschiedenen Aspekten wird ein optoelektronischer wellenlängensensitiver Detektor bereitgestellt, der kleiner, einfacher und kostengünstiger hergestellt werden kann als ein herkömmliches Spektrometer.

Gemäß verschiedenen Aspekten wird ein optoelektronischer Detektor bereitgestellt, der eine geringere Winkelabhängigkeit in der Detektion elektromagnetischer Strahlung hat als ein herkömmliches Spektrometer. Mittels des optoelektronischen Detektors kann eine Messung durchgeführt werden, wobei das entsprechende Messergebnis nur wenig oder gar nicht von einem Einfallswinkel der zu detektierenden (z.B. zu untersuchenden) elektromagnetischen Strahlung abhängig ist, was ein Vorteil gegenüber herkömmlichen Spektrometern sein kann.

Gemäß verschiedenen Aspekten wird ein optoelektronischer Detektor bereitgestellt, der einfach an einen Wellenlängenbereich einer zu detektierenden (z.B. untersuchenden) Strahlung angepasst werden kann, indem beispielsweise eine Materialwahl für das aktive Element des Detektors angepasst wird.

Gemäß verschiedenen Aspekten kann ein optoelektronischer Detektor aufweisen: mindestens ein Funktionselement, welches eingerichtet ist, eine zu detektierende elektromagnetische Strahlung zu absorbieren und eine Lumineszenz-Strahlung derart zu emittieren, dass eine Intensität der emittierten Lumineszenz-Strahlung ein zeitabhängiges Abklingverhalten aufweist, und dass das zeitabhängige Abklingverhalten eine spektrale Eigenschaft einer zu detektierenden elektromagnetischen Strahlung repräsentiert; und eine optoelektronische Detektoreinheit, welche eingerichtet ist das zeitabhängige Abklingverhalten der Intensität der von dem Funktionselement emittierten Lumineszenz-Strahlung zu ermitteln zum Ermitteln der spektralen Eigenschaft einer zu detektierenden elektromagnetischen Strahlung und/oder zum Ermitteln eines Emissionsmaterials, welches eine zu detektierende elektromagnetische Strahlung emittiert.

Gemäß verschiedenen Aspekten wird ein optoelektronischer Detektor bereitgestellt, der ein Funktionselement (z.B. eine Funktionsschicht, eine aktive Schicht, (z.B. eine aktive Dünnschicht)) aufweist. Der optoelektronische Detektor kann beispielsweise kleiner, einfacher und kostengünstiger hergestellt werden als ein herkömmliches Spektrometer. Der optoelektronische Detektor kann beispielsweise universell verwendet werden, da dieser aufgrund seiner geringen Größe in eine Vielzahl von unterschiedlichen Prozessabläufen integriert werden kann.

Der optoelektronische Detektor kann beispielsweise eine reduzierte Winkelabhängigkeit in der Detektion einer zu detektierenden elektromagnetischen Strahlung haben verglichen mit einem herkömmlichen Spektrometer. Beispielsweise kann der optoelektronische Detektor weniger empfindlich auf einen Einfallswinkel der zu detektierenden elektromagnetischen Strahlung sein als ein herkömmliches Spektrometer.

Der optoelektronische Detektor kann mittels einer geeigneten Wahl der aktiven Materialien (z.B. Materialien die lumineszieren können), die das Funktionselement aufweisen kann, an die zu detektierende elektromagnetische Strahlung angepasst werden (z.B. spektral angepasst werden).

Somit wird ein optoelektronischer Detektor zum Detektieren elektromagnetischer Strahlung bereitgestellt, der in einer Vielzahl von Anwendungen und/oder Prozessen verwendet werden kann und an eine jeweilige Anwendung und/oder einen jeweiligen Prozess angepasst werden kann.

Gemäß verschiedenen Aspekten können aktive Materialien verwendet werden. Als aktive Materialien können Stoffe oder Stoffgemische bezeichnet werden, die lumineszieren können. Dabei ist die Lumineszenz in einigen Anwendungen ein Resultat einer, beispielsweisen externen, Anregung.

Eine elektromagnetische Strahlung, die von einem aktiven Material emittiert wird, kann als Lumineszenz-Strahlung bezeichnet werden. Die Lumineszenz-Strahlung kann von einem aktiven Material emittiert werden, nachdem das aktive Material von außen zugeführte Energie (z.B. thermische, optische, und/oder elektrische Energie) absorbiert hat. Aufgrund der Absorption kann das aktive Material in einen angeregten Zustand (einen sogenannten Anregungszustand) versetzt werden.

Beispielsweise kann die Lumineszenz-Strahlung von einem aktiven Material, das luminesziert, emittiert werden, ohne dass die Temperatur des lumineszierenden Materials erhöht wird verglichen zu einem Zustand, in dem das aktive Material keine Lumineszenz-Strahlung emittiert. Beispielsweise können sich ein oder mehrere Wellenlängen einer elektromagnetischen Strahlung, die das aktive Material absorbiert hat (und dadurch angeregt wurde), von ein oder mehreren Wellenlängen der vom Material emittierten Lumineszenz-Strahlung unterscheiden.

Beispielsweise kann die Lumineszenz eine Fluoreszenz sein, wenn für die Emission von Lumineszenz-Strahlung kein zusätzlicher Umwandlungsprozess zwischen der Absorption der von außen zugeführten Energie und der Emission der Lumineszenz-Strahlung notwendig ist. Beispielsweise kann der Ausgangszustand von Fluoreszenz ein sogenannter Singulett-Zustand sein. Bei einem Singulett-Zustand kann der Gesamtspin eines angeregten Zustandes gleich null sein. Beispielsweise kann die Absorption im Wesentlichen von einem Grundzustand in einen Singulett-Zustand führen, von dem Fluoreszenz ausgehen kann.

Beispielsweise kann die Lumineszenz eine Phosphoreszenz sein, wenn für die Emission von Lumineszenz-Strahlung ein zusätzlicher Umwandlungsprozess zwischen der Absorption der von außen zugeführten Energie und der Emission der Lumineszenz-Strahlung notwendig ist. Beispielsweise kann der Ausgangszustand bei Phosphoreszenz ein Triplett-Zustand sein, bei dem der Gesamtspin gleich eins ist. Beispielsweise kann ein angeregter Zustand seinen Spin ändern und in einen Triplett-Zustand übergehen (sogenanntes Intersystem Crossing (ISC)).

Beispiele für Umwandlungsprozesse können sein: ein Intersystem Crossing, ein Energietransfer von einem Singulett-Zustand zu einem Triplett-Zustand zwischen voneinander verschiedenen Molekülen, und/oder eine sogenannte Singulett Fission. Die Singulett Fission ist ein Prozess, bei dem ein Singulett-Zustand in zwei Triplett-Zustände zerfällt, wobei mindestens zwei verschiedene Moleküle, je einen Triplett-Zustand aufnehmen können.

Im Allgemeinen kann elektromagnetische Strahlung (hierin auch kurz als Strahlung bezeichnet) von einer Strahlungsquelle (z.B. einer Lichtquelle, einer Prüflichtquelle, einem lumineszierenden Material, und/oder einem Prüffarbstoff) emittiert werden. Die Strahlungsquelle kann beispielsweise eine Strahlung mit einem Emissions-Spektrum emittieren. Beispielsweise kann das Emissions-Spektrum spezifisch bzw. charakteristisch für die Strahlungsquelle (z.B. für eine bestimmte Strahlungsquelle) der emittierten elektromagnetischen Strahlung sein. Beispielsweise kann eine bestimmte Strahlungsquelle elektromagnetische Strahlung mit ein oder mehreren bestimmten Wellenlängen (bzw. mit einem sogenannten charakteristischen Wellenlängenspektrum) emittieren. Beispielsweise kann die Strahlungsquelle mittels ihrer jeweiligen emittierten Strahlung (z.B. ihres charakteristischen Wellenlängenspektrums) identifiziert werden.

Als ein Wellenlängenspektrum (oder hierin kurz als Spektrum bezeichnet) kann eine Auswahl von ein oder mehreren Wellenlängen einer Strahlung bezeichnet werden. Eine auf eine oder mehrere Wellenlängen bezogene Eigenschaft kann mit dem Attribut spektral versehen werden. Beispielsweise kann ein spektrales Auflösevermögen, ein Auflösevermögen von Wellenlängen bezeichnen. Ein Wellenlängenspektrum kann auch eine wellenlängenabhängige Intensitätsverteilung sein.

Im Allgemeinen kann Strahlung eine Strahlungsintensität aufweisen, die im Folgenden auch kurz als Intensität bezeichnet werden kann. Eine Flächenleistungsdichte der Strahlung (z.B. eine Strahlstärke bzw. Strahlungsstärke, Bestrahlungsstärke, spezifische Ausstrahlung, oder Ausstrahlungsstromdichte) kann als Intensität bezeichnet werden. Die Strahlungsintensität kann allgemein wellenlängenabhängig sein. Eine Strahlungsintensität kann im Sinne einer Gesamt-Strahlungsintensität bezüglich einer betrachteten Wellenlänge der Strahlung oder eines betrachteten Wellenlängenspektrums der Strahlung ermittelt werden, z.B. als ein Intergral oder als eine Summe über die jeweils betrachteten ein oder mehreren Wellenlängen. Demzufolge können zwei Strahlungen bezüglich deren Wellenlängenspektrums und/oder bezüglicher deren Intensität voneinander verschieden sein. Ein Photodetektor kann Strahlung zweier Quellen mit gleichem Wellenlängenspektrum (oder allgemein zwei Strahlungen mit gleichem Wellenlängenspektrum) als unterschiedlich intensiv feststellen, wenn voneinander verschiedene Detektorausschläge hervorgerufen werden. Mittels eines entsprechend eingerichteten Photodetektors (z.B. aufweisend einen Filter oder bauartbedingt) kann eine Strahlung auch nur bezüglich eines bestimmten Wellenlängenbereichs oder einer bestimmten Wellenlänge analysiert werden, z.B. kann eine Teil-Intensität eines Teils des Wellenlängenspektrums ermittelt werden. Strahlungen zweier Quellen (oder allgemein zwei Strahlungen) können als gleich verstanden werden, wenn diese die gleiche spektrale Intensitätsverteilung aufweisen. Andernfalls können sich Strahlungen zweier Quellen (oder allgemein zwei Strahlungen) voneinander bezüglich des Spektrums (d.h. bezüglich der beteiligten ein oder mehreren Wellenlängen) und/oder bezüglich der Intensität voneinander unterscheiden.

Eine Intensität einer emittierten Strahlung kann eine zeitabhängige Größe sein. Beispielsweise kann die Intensität mit der Zeit abnehmen. Die Abnahme der Intensität kann mittels einer Intensitäts-Zerfallskonstante (kurz als Zerfallskonstante bezeichnet) beschrieben werden (oder mittels anderer Größen, die in die Zerfallskonstante umgerechnet werden können). Beispielsweise kann eine Intensitätsabnahme mit einer Intensitäts-Zerfallszeit beschrieben werden. Die Intensitäts-Zerfallszeit kann eine Zeit sein, innerhalb der die gesamte (z.B. detektierte) Intensität der emittierten Strahlung von einer ersten Intensität auf einen vorbestimmten Anteil der ersten Intensität (z.B. 95%, 90%, 75%, 50%, 25%, 10%, 5%, 1%, 0,1%, 0,01% o.ä.) abgefallen ist.

Im Folgenden kann ein Prozess, in dem eine Intensität einer Lumineszenz-Strahlung abnimmt, die von einem aktiven Material emittiert wird, als "Abklingen der Intensität" oder kurz als "Abklingen" bezeichnet werden. Ein Zustand in dem die Intensität abklingt, kann als Abklingzustand bezeichnet werden. Beispielsweise kann das aktive Material abklingen, wenn es mehr Energie durch Lumineszenz-Strahlung emittiert (z.B. abgibt), als es mittels der Absorption der von außen zugeführten Anregungsenergie aufnimmt. Insbesondere kann das aktive Material abklingen, wenn keine Anregungs-Energie von außen zugeführt wird.

Im Folgenden kann eine Intensitäts-Zerfallszeit von aktiven Materialien als Abklingzeit bezeichnet werden. Beispielsweise können Materialien mit voneinander verschiedenen Abklingzeiten verwendet werden. Analog kann die Intensitäts-Zerfallskonstante als Abklingkonstante bezeichnet werden. Die Abklingzeit bzw. die Abklingkonstante eines aktiven Materials kann charakteristisch für das jeweilige aktive Material sein.

Gemäß verschiedenen Aspekten kann eine Gesamtintensität einer zu detektierenden elektromagnetischen Strahlung detektiert und/oder ermittelt werden. Als Gesamtintensität der zu detektierenden elektromagnetischen Strahlung kann die summierte (z.B. integrale) Intensität der Strahlung mit allen (zumindest detektierbaren) Wellenlängen verstanden werden.

Wellenlängen, deren Intensität unterhalb einer bestimmten Mindestintensität liegt, können beispielsweise beim Auswerten von Messungen als Rauschen vernachlässigt werden. Als Mindestintensität kann beispielsweise eine Intensität bezeichnet werden, die größer als 5% (z.B. größer als 10% oder unter Umständen sogar größer als 15%, 20% oder größer als 25%) der Intensität der Wellenlänge ist, die die maximal emittierte Intensität hat.

Es versteht sich, dass der Begriff Strahlungsintensität sich sowohl auf eine oder mehrere spezifische Wellenlängen, einen Wellenlängenbereich oder den gesamten jeweils relevanten Wellenlängenbereich beziehen kann. Ein zu detektierender Wellenlängenbereich kann beispielsweise mittels ein oder mehrerer Filter oder Detektor-bauartbedingt definiert sein. Ein emittierter Wellenlängenbereich kann beispielsweise durch die Emissionsquelle definiert sein.

Im Allgemeinen kann Strahlung von einem Absorber (z.B. einem Material (z.B. einem aktiven Material) und/oder einem Bauteil) absorbiert werden. Ein Absorber kann eine Absorptionsempfindlichkeit haben, die für den jeweiligen Absorber charakteristisch ist. Beispielsweise kann mittels der Absorptionsempfindlichkeit eines Absorbers beschrieben werden, wie stark der Absorber Strahlung, die ein oder mehrere bestimmte Wellenlängen aufweist, absorbiert. Beispielsweise kann ein Absorber eine erste Strahlung, die ein oder mehrere erste Wellenlängen aufweist, besser absorbieren als eine zweite Strahlung, die ein oder mehrere zweite Wellenlängen aufweist, wobei die ein oder mehreren zweiten Wellenlängen von den ein oder mehreren ersten Wellenlängen verschieden sind. Es versteht sich, dass eine Absorptionsempfindlichkeit eines ersten Absorbers unterschiedlich von einer Absorptionsempfindlichkeit eines zweiten Absorbers sein kann.

Gemäß verschiedenen Aspekten können mehrere aktive Materialien (die in mindestens einer Funktionsschicht enthalten sind) gleichzeitig bestrahlt werden. Wie zuvor beschrieben kann jedes der mehreren aktiven Materialen eine Absorptionsempfindlichkeit, eine Intensitäts-Zerfallskonstante und ein Emissionsspektrum aufweisen, die für das jeweilige aktive Material der aktiven Materialen charakteristisch sind. Werden mehrere aktiven Materialien gleichzeitig bestrahlt, so können diese jeweils eine voneinander verschiedene Lumineszenz-Strahlung, d.h. mit unterschiedlicher Intensität und/oder einem unterschiedlichen Emissionsspektrum und/oder über einen unterschiedlichen Zeitraum, emittieren. Eine Überlagerung der voneinander verschiedenen Lumineszenz-Strahlungen kann als eine charakteristische Antwort der mehreren aktiven Materialien bezeichnet werden.

Es versteht sich, dass die charakteristische Antwort von einer ersten Gruppe von mehreren aktiven Materialien verschieden von einer zweiten Gruppe von mehreren aktiven Materialien sein kann, wenn beide Gruppen mit der gleichen Strahlung bestrahlt (und dadurch angeregt) werden, sofern sich zumindest eines der aktiven Materialien zwischen den Gruppen unterscheidet. Ferner versteht sich, dass sich die charakteristische Antwort von einer Gruppe von mehreren aktiven Materialien unterscheiden kann, je nachdem ob die Gruppe mittels einer ersten Strahlung oder mittels einer zweiten Strahlung bestrahlt (und dadurch angeregt) wird, sofern sich die erste und zweite Strahlung in ihrem Strahlungsspektrum voneinander unterscheiden.

Im Allgemeinen kann eine elektromagnetische Strahlung (hierin als Strahlung bezeichnet) ultraviolette Strahlung (UV-Strahlung), und/oder extreme UV-Strahlung (EUV), und/oder sichtbares Licht, und/oder infrarote Strahlung (IR-Strahlung) aufweisen oder sein. Es versteht sich, dass die hierin verwendete bzw. beschriebene elektromagnetische Strahlung, insbesondere die Lumineszenz-Strahlung und eine "zu detektierende Strahlung", ein oder mehrere Wellenlängen aufweisen kann. Die jeweiligen Wellenlängen können aus ein oder mehreren Bereichen der zuvor beschriebenen Bereiche ausgewählt sein. Insbesondere soll unter elektromagnetischer Strahlung keine ionisierende Strahlung verstanden werden, die aufgrund eines radioaktiven Zerfalls entsteht.

Als ein Sicherheitsmerkmal kann ein Merkmal bezeichnet werden, das verwendet werden kann um die Echtheit eines Objektes (z.B. eines Dokuments (z.B. eines Personaldokuments, eines Geldscheines etc.) zu überprüfen (z.B. zu verifizieren bzw. zu falsifizieren). Beispielsweise können ein oder mehrere aktive Materialien, die lumineszieren können, innerhalb eines oder als ein Sicherheitsmerkmal verwendet werden.

Ausführungsformen sind in den Figuren dargestellt und werden im Folgenden näher erläutert.

Es zeigen
- Figuren 1A bis 3: optoelektronische Detektoren gemäß verschiedenen Aspekten;
- Figur 4A: schematisch wellenlängenabhängige Absorptionsempfindlichkeiten gemäß verschiedenen Aspekten;
- Figur 4B: schematisch zeitabhängige Intensitätsverläufe gemäß verschiedenen Aspekten;
- Figuren 5A und 5B: optoelektronische Detektoren gemäß verschiedenen Aspekten;
- Figur 6: eine optoelektronische Detektorvorrichtung gemäß verschiedenen Aspekten;
- Figur 7: schematische zeitabhängige Intensitätsverläufe gemäß verschiedenen Aspekten; und
- Figur 8: schematisch ein Verfahren zum Detektieren einer elektromagnetischen Strahlung gemäß verschiedenen Aspekten.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende Beschreibung ist deshalb nicht in einschränkendem Sinne aufzufassen, und der Schutzumfang der vorliegenden Erfindung wird durch die angefügten Ansprüche definiert.

Gemäß verschiedenen Aspekten wird ein optoelektronischer Detektor bereitgestellt. Der optoelektronische Detektor kann verwendet werden, um eine zu detektierende elektromagnetische Strahlung zu detektieren. Der optoelektronische Detektor kann beispielsweise verwendet werden, um ein charakteristisches Wellenlängenspektrum einer Strahlungsquelle zu ermitteln und/oder zu überprüfen. Der optoelektronische Detektor kann beispielsweise verwendet werden, um eine Wellenlänge einer monochromatischen Strahlung zu ermitteln.

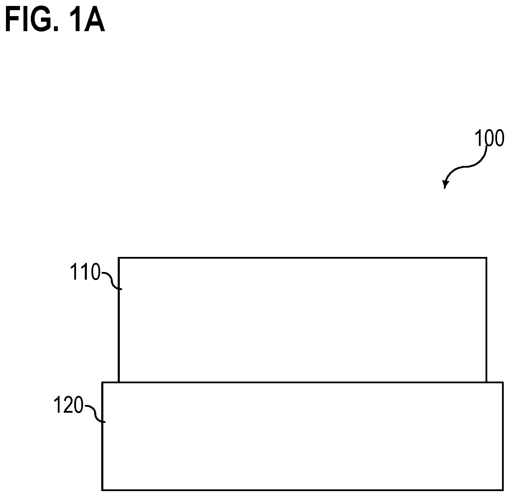

In Figur 1A ist ein optoelektronischer Detektor 100 gemäß verschiedenen Aspekten dargestellt. Der optoelektronische Detektor 100 kann ein Funktionselement 110 (z.B. eine Funktionsschicht (z.B. eine aktive Schicht), ein Körper (z.B. ein Zylinder)) und eine optoelektronische Detektoreinheit 120 aufweisen. Beispielsweise kann die optoelektronische Detektoreinheit 120 ein Photodetektor sein.

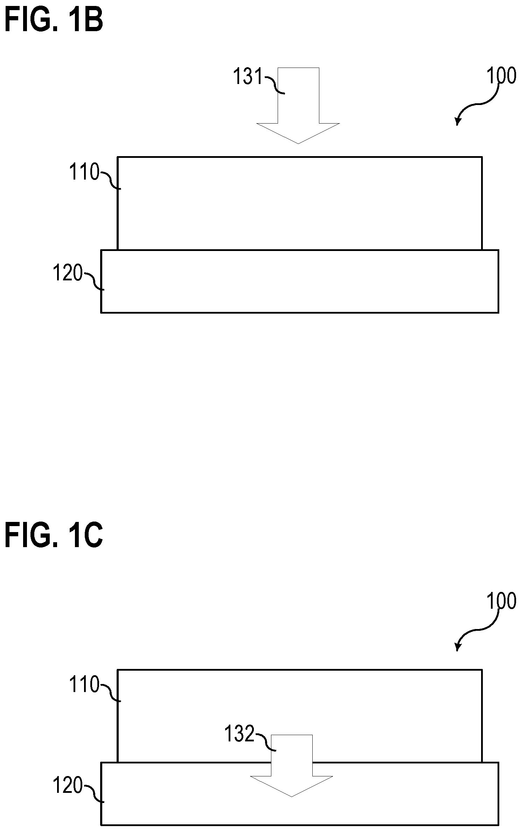

In Figur 1B ist ein Anregungszustand des optoelektronischen Detektors 100 aus Figur 1A dargestellt. Das Funktionselement 110 wird mit einer zu detektierenden Strahlung 131 bestrahlt. Das Funktionselement 110 kann eingerichtet sein, die zu detektierende Strahlung 131 zu absorbieren, wodurch das Funktionselement 110 angeregt werden kann, zu lumineszieren.

Nach einer vorbestimmten Zeit und/oder wenn eine Intensität der Lumineszenz-Strahlung nicht weiter zunimmt (d.h. ein stationärer Zustand erreicht ist), kann die Bestrahlung (und damit einhergehende Anregung) des Funktionselements 110 mittels der zu detektierenden Strahlung 131 beendet werden. Dadurch kann das Funktionselement 110 in einen Abklingzustand versetzt werden. Falls das Funktionselement 110 die Lumineszenz-Strahlung erst aufgrund eines Umwandlungsprozesses emittiert, kann der Umwandlungsprozess durchgeführt werden, um den Abklingzustand zu erreichen.

In Figur 1C ist ein Abklingzustand des optoelektronischen Detektors 100 aus Figur 1A dargestellt. Im Abklingzustand kann das Funktionselement 110 eine Lumineszenz-Strahlung 132 emittieren. Die optoelektronische Detektoreinheit 120 kann eingerichtet sein, die Lumineszenz-Strahlung 132 zu detektieren. Insbesondere kann die optoelektronische Detektoreinheit 120 eingerichtet sein, einen zeitlichen Verlauf einer Intensität (z.B. einer Gesamtintensität) der Lumineszenz-Strahlung 132 zu detektieren.

Die vom Funktionselement 110 emittierte Lumineszenz-Strahlung 132 kann ein zeitabhängiges Abklingverhalten und/oder ein charakteristisches (z.B. zeitabhängiges) Intensitäts-Wellenlängenspektrum aufweisen, die ein oder mehrere spektrale Eigenschaften der zu detektierenden Strahlung repräsentieren können. Beispielsweise können das zeitabhängige Abklingverhalten und/oder das charakteristische (z.B. zeitabhängiges) Intensitäts-Wellenlängenspektrum ein spezifisches Wellenlängenspektrum der zu detektierenden elektromagnetischen Strahlung 131 repräsentieren und/oder umgekehrt. Beispielsweise kann die vom Funktionselement 110 emittierte Lumineszenz-Strahlung 132 eine charakteristische Antwort auf die zu detektierende Strahlung 131 sein.

Das zeitabhängige Abklingverhalten der Intensität der Lumineszenz-Strahlung 132 kann abhängig sein von ein oder mehreren Eigenschaften der zu detektierenden Strahlung 131 (z.B. einer Intensität, ein oder mehrerer Wellenlängen, einem Wellenlängenspektrum). Beispielsweise kann die Intensität der emittierten Lumineszenz-Strahlung 132 in einem ersten Zeitintervall mit einer ersten Abklingzeit abklingen. Beispielsweise kann die Intensität der emittierten Lumineszenz-Strahlung 132 in einem zweiten Zeitintervall, das nicht mit dem ersten überlappt, mit einer zweiten Abklingzeit abklingen, die von der ersten Abklingzeit verschieden ist.

Beispielsweise kann die erste Abklingzeit um mehr als einen Faktor 10 (z.B. 10², 10³, 10⁴, 10⁵ oder um mehr als Faktor 10⁶) kleiner sein als die zweite Abklingzeit. Beispielsweise kann die erste Abklingzeit in einem der folgenden Intervalle liegen: (1 ps, 200 ps), (200 ps, 400 ps), (400 ps, 600 ps), (600 ps, 800 ps), (800 ps, 1 ns), (1 ns, 200 ns), (200 ns, 400 ns), (400 ns, 600 ns), (600 ns, 800 ns), (800 ns, 1 µs), (1 µs, 200 µs), (200 µs, 400 µs), (400 µs, 600 µs), (600 µs, 800 µs), oder (800 µs, 1 ms). Beispielsweise kann die zweite Abklingzeit in einem der folgenden Intervalle liegen: (200 ps, 400 ps), (400 ps, 600 ps), (600 ps, 800 ps), (800 ps, 1 ns), (1 ns, 200 ns), (200 ns, 400 ns), (400 ns, 600 ns), (600 ns, 800 ns), (800 ns, 1 µs), (1 µs, 200 µs), (200 µs, 400 µs), (400 µs, 600 µs), (600 µs, 800 µs), (800 µs, 1 ms), (1 ms, 200 ms), (200 ms, 400 ms), (400 ms, 600 ms), (600 ms, 800 ms), oder (800 ms, 1 s). Es versteht sich, dass das zeitabhängige Abklingverhalten auch mittels einer Intensitäts-Zerfallskonstante o.ä. anstelle der Abklingzeit beschrieben werden kann.

Ein oder mehrere Abklingzeiten können ein oder mehrere spezifische Wellenlängen der zu detektierenden Strahlung 131 repräsentieren (und umgekehrt). Beispielsweise kann eine spezifische Wellenlänge der zu detektierenden Strahlung 131 durch eine spezifische Abklingzeit des Funktionselements 110 repräsentiert werden. Beispielsweise können mehrere spezifische Abklingzeiten (z.B. eine Reihenfolge von mehreren spezifischen Abklingzeiten) eine oder mehrere spezifische Wellenlängen bzw. ein spezifisches Wellenlängenspektrum der zu detektierenden Strahlung repräsentieren.

Anschaulich kann das Funktionselement 110 von einer zu detektierenden Strahlung 131, die ein spezifisches Wellenlängenspektrum hat, angeregt werden. Nach einer vorbestimmten Zeit wird die Bestrahlung mit der zu detektierenden Strahlung gestoppt und das Funktionselement 110 wird in einen Abklingzustand versetzt. In dem Abklingzustand emittiert das Funktionselement 110 eine Lumineszenz-Strahlung 132 mit einer Intensität, die im Laufe der Zeit abnimmt. Die Abnahme der Intensität weist dabei ein oder mehrere Charakteristika (z.B. Stufen, Sprünge, unterschiedliche Gradienten innerhalb des zeitlichen Verlaufs der Intensität, und/oder Abklingzeiten bzw. Abklingkonstanten) auf, die charakteristisch für das spezifische Wellenlängenspektrum der zu detektierenden Strahlung 131 sind.

Beispielsweise kann die Intensität zuerst in einem ersten Zeitintervall mit einer ersten Rate abnehmen und in einem zweiten Zeitintervall mit einer zweiten Rate abnehmen. Das erste und das zweite Zeitintervall überlappen sich nicht. Die erste Rate kann sich von der zweiten Rate unterscheiden. Beispielsweise können die Länge des ersten Zeitintervalls, und/oder die Länge des zweiten Zeitintervalls, und/oder die erste Rate und/oder die zweite Rate ein oder mehrere Charakteristika sein, die charakteristisch für das spezifische Wellenlängenspektrum der zu detektierenden Strahlung 131 sind.

Es versteht sich, dass die Intensität auch in mehr als zwei voneinander verschiedenen Zeitintervallen, z.B. in 3, 4, 5, 6, 7, 8, 9, 10, oder mehr als 10 (z.B. 50, 100 etc.) Zeitintervallen, abnimmt. Somit könnte beispielsweise ein Ansprechbereich, bzw. ein Bereich in dem der optoelektronische Detektor 100 Strahlung zuverlässig detektieren kann, vergrößert werden. Gleichzeitig kann aber eine Unterscheidung zwischen verschiedenen Charakteristika (z.B. verschiedenen Abklingzeiten bzw. Abklingkonstanten) schwieriger werden. Dieses Problem kann beispielsweise gelöst werden, indem Materialien mit Abklingkonstanten aus voneinander verschiedenen Größenordnungen verwendet werden. Beispielsweise kann ein erstes Material eine Abklingkonstante im Bereich von 10 ns bis 20 ns haben, ein zweites Material eine Abklingkonstante im Bereich von 100 ns bis 200 ns haben, ein drittes Material eine Abklingkonstante im Bereich von 10 µs bis 20 µs haben, etc. Es versteht sich, dass die Zahlenwerte und Größenordnungen nur Beispiele für eine verbesserte Anschaulichkeit sind und nicht als einschränkend zu verstehen sind.

Gemäß verschiedenen Aspekten, kann die Bestrahlung von einem Funktionselements 110 mit einer zu detektierenden Strahlung 131 gestoppt werden. Beispielsweise kann die optoelektronische dafür Detektoreinheit 120 eine Abschirmeinheit aufweisen.

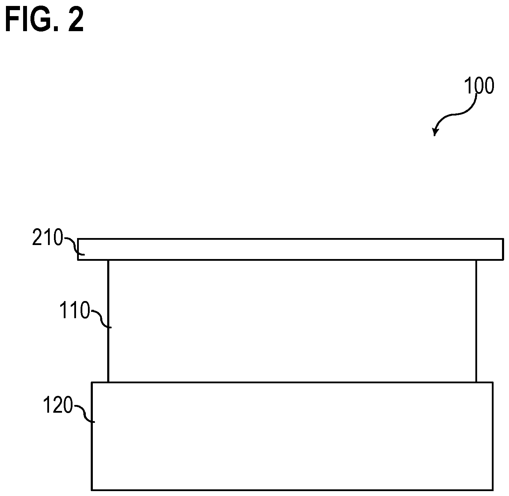

In **Figur 2** ist eine optoelektronische Detektoreinheit 120 gemäß verschiedenen Aspekten dargestellt, die eine Abschirmeinheit 210 aufweist. Die Abschirmeinheit 210 kann eingerichtet sein, das Funktionselement 110 von der zu detektierenden Strahlung 131 abzuschirmen (z.B. zu mehr als 80%, 85%, 90%, 95%, 98% oder zu mehr als 99%). Beispielsweise kann die Abschirmeinheit 210 die zu detektierende Strahlung 131 absorbieren und/oder reflektieren, z.B. zu mehr als 80% (z.B. zu mehr als 85%, 90%, 95%, 98% oder zu mehr als 99%). Beispielsweise kann die Abschirmeinheit 210 die zu detektierende Strahlung 131 zu weniger als 20% (z.B. zu weniger als 15%, 10%, 5%, 2% oder zu weniger als 1%) transmittieren. Beispielsweise kann die Abschirmeinheit 210 ein Shutter, eine Abdeckung, ein geeigneter Filter, und/oder dergleichen aufweisen oder sein. Es versteht sich, dass eine Abschirmeinheit 210 auf eine Absorptionsempfindlichkeit des Funktionselement 110 und/oder einem Wellenlängenspektrum der zu detektierenden Strahlung 131 angepasst sein kann. Beispielsweise kann die Abschirmeinheit 210 das Funktionselement 110 nur von Strahlung, die Wellenlängen innerhalb der Absorptionsempfindlichkeit des Funktionselements 110 aufweist, und/oder von Strahlung, die Wellenlängen innerhalb des Wellenlängenspektrums der zu detektierenden Strahlung 131 aufweist, abschirmen.

Gemäß verschiedenen Aspekten kann das Funktionselement 110 ein oder mehrere aktive Materialien aufweisen, wobei die ein oder mehreren aktiven Materialien lumineszieren können. Die ein oder mehreren aktiven Materialien können voneinander verschieden sein. Beispielsweise können die ein oder mehreren aktiven Materialien innerhalb des Funktionselements als Farbstoffe bezeichnet werden.

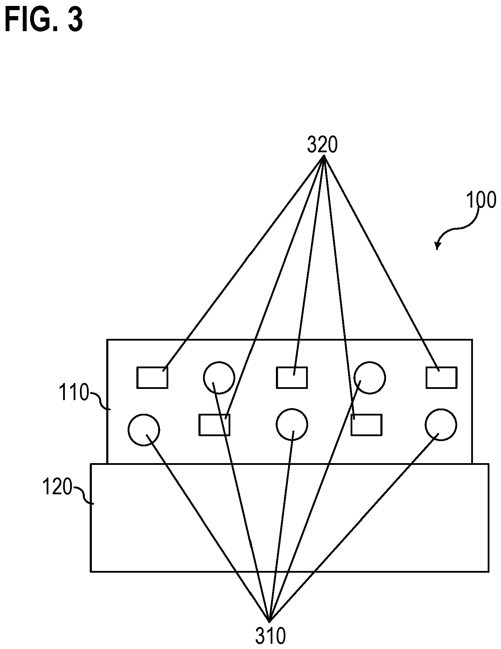

In **Figur 3B** ist ein optoelektronischer Detektor 100 gemäß verschiedenen Aspekten dargestellt. Der optoelektronische Detektor 100 kann ein Funktionselement 110 und eine optoelektronische Detektoreinheit 120 aufweisen, wobei das Funktionselement 110 beispielhaft ein erstes aktives Material 310 und ein zweites aktives Material 320 aufweisen kann. Beispielsweise können das erste aktive Material 310 und das zweite aktive Material 320 lumineszieren.

Das erste aktive Material 310 kann verschieden vom zweiten aktiven Material 320 sein, beispielsweise bezüglich einer jeweiligen stofflichen Zusammensetzung, und/oder einer jeweiligen Absorptionsempfindlichkeit, und/oder einem jeweiligen Emissionsspektrum, und/oder einer jeweiligen Abklingzeit. Beispielsweise können das erste und das zweite aktive Material ihre jeweilige emittierte Lumineszenz-Strahlung auf voneinander verschiedenen Zeitskalen und/oder in unterschiedlichen Wellenlängenbereichen emittieren. Beispielsweise kann eine erste Abklingzeit des ersten aktiven Materials größer sein als eine zweite Abklingzeit des zweiten aktiven Materials, z.B. um mehr als den Faktor 1,1, 1,5, 2, 5, 10, 50, 100, 1000 oder um mehr als den Faktor 10000. Beispielsweise können das erste und das zweite aktive Material spektral unterschiedlich absorbieren.

Beispielsweise kann abhängig von einem Wellenlängenspektrum der zu detektierenden Strahlung 131 und/oder jeweiligen Absorptionsempfindlichkeiten der aktiven Materialien Funktionselement 110 ein charakteristisches Verhältnis von angeregten Zuständen in den aktiven Materialien erzeugt werden. Das Verhältnis von angeregten Zuständen, insbesondere von verschiedenen angeregten aktiven Materialien, kann als ein Anregungsmischungsverhältnis bezeichnet werden. Das soll im Folgenden an zwei beispielhaften aktiven Materialien verdeutlicht werden.

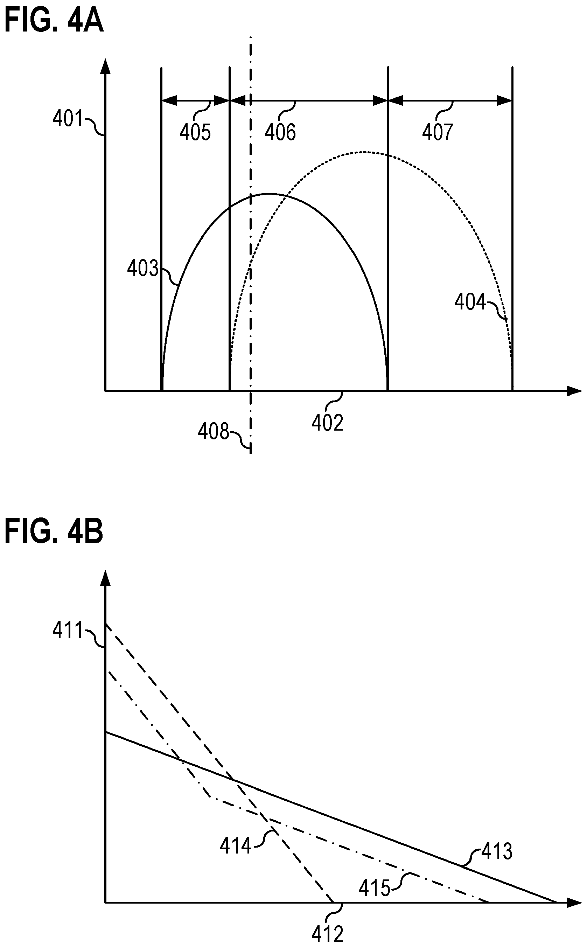

In **Figur 4A** sind beispielhaft wellenlängenabhängige Absorptionsempfindlichkeiten von einem ersten und einem zweiten aktive Material dargestellt. Die vertikale Achse repräsentiert die Absorptionsempfindlichkeit 401 der aktiven Materialien und die horizontale Achse repräsentiert eine Wellenlänge 402 einer zu absorbierenden Strahlung. Beispielhaft ist eine wellenlängenabhängige Absorptionsempfindlichkeit eines ersten aktiven Materials 310 mittels einer ersten Kurve 403 dargestellt. Beispielhaft ist eine wellenlängenabhängige Absorptionsempfindlichkeit eines zweiten aktiven Materials 320 mittels einer zweiten Kurve 404 dargestellt.

Beispielsweise kann eine Strahlung mit Wellenlängen ausgewählt aus einem ersten Wellenlängenbereich 405 nur das erste aktive Material 310 anregen. In der Folge der Anregung kann das erste aktiven Material 310 lumineszieren. Analog dazu kann eine weitere Strahlung mit Wellenlängen aus einem dritten Bereich 407 nur das zweite aktive Material anregen. Strahlung, die Wellenlängen aus einem zweiten Bereich 406 aufweist, in dem beide aktiven Materialien angeregt werden können, kann beide aktiven Materialien anregen. Aufgrund der unterschiedlichen Absorptionsempfindlichkeit können die aktiven Materialien unterschiedlich stark voneinander angeregt werden zu lumineszieren. Beispielsweise kann eine monochrome Strahlung die mit einer beispielhaften Wellenlänge 408, dargestellt durch eine Punkt-Strich-Linie, das erste aktive Material stärker anregen als das zweite aktive Material.

Wie bereits beschrieben, können sich die aktiven Materialien bezüglich ihrer Emissionsspektren (den Wellenlängenspektren der jeweiligen Lumineszenz-Strahlung) und/oder dem zeitlichen Verlauf ihrer jeweiligen Abklingcharakteristiken unterscheiden. Dies ist beispielhaft in Figur 4B veranschaulicht.

**Figur 4B** stellt schematisch auf der vertikalen Achse eine Intensität 411 einer Lumineszenz-Strahlung und auf der horizontalen Achse eine Zeit 412 dar. Beispielsweise können Messdaten für ein derartiges Diagramm mittels der optoelektronische Detektoreinheit 120 ermittelt (z.B. aufgenommen) werden.

Werden beispielsweise die beiden aktiven Materialien, wie zuvor zu der Figur 4A beschrieben, mit einer Strahlung mit Wellenlängen ausgewählt aus dem ersten Wellenlängenbereich 405 bestrahlt, wird nur das erste aktive Material 310 angeregt. Wenn keine Bestrahlung mit der Strahlung mehr vorliegt, kann eine Intensität 413 der Lumineszenz-Strahlung des ersten aktiven Materials 310 innerhalb eines ersten Zeitintervalls (z.B. einer ersten Abklingzeit) abnehmen, wie in Figur 4B dargestellt ist. Analog kann nach einer Bestrahlung mittels einer Strahlung mit Wellenlängen aus dem dritten Bereich 407 eine Abnahme einer Intensität 414 der Lumineszenz-Strahlung des zweiten aktiven Materials 320 innerhalb eines zweiten Zeitintervalls (z.B. einer zweiten Abklingzeit) ermittelt werden. Beispielsweise können das erste und das zweite Zeitintervall unterschiedlich voneinander sein, z.B. kann das erste Zeitintervall länger als das zweite Zeitintervall sein.

Werden beispielsweise die mehreren aktiven Materialien (z.B. das erste und das zweite aktive Material) mit einer Strahlung mit Wellenlängen aus dem zweiten Wellenlängenbereich 406 bestrahlt, werden die mehreren aktiven Material angeregt. Aufgrund der voneinander verschiedenen Absorptionsempfindlichkeiten der mehreren aktiven Materialien, können die mehreren aktiven Materialien verschieden stark angeregt werden. Somit können die mehreren aktiven Materialien Lumineszenz-Strahlung mit voneinander verschiedenen Intensitäten und voneinander verschiedenen zeitlichen Intensitätsverläufen emittieren. In einem Resultat kann eine gemischte Lumineszenz-Strahlung emittiert werden, die eine Mischung von der ersten Lumineszenz-Strahlung emittiert vom ersten aktiven Material 310 und der zweiten Lumineszenz-Strahlung emittiert vom zweiten aktiven Material 320. Ein Intensitätsverlauf 415 einer derartigen gemischten Lumineszenz-Strahlung ist beispielsweise in Figur 4B durch eine Punkt-Strichlinie dargestellt. Beispielsweise kann der Intensitätsverlauf 415 der gemischten Lumineszenz-Strahlung einen Knick (anschaulich eine abrupte Änderung des Anstiegs der Kurve) haben, an dem sich ein Anstieg des Intensitätsverlaufes 415 ändert. Beispielsweise kann ein erster Anstieg zeitlich vor dem Knick identisch sein zur Abnahme der Intensität 413 der Lumineszenz-Strahlung des ersten aktiven Materials 310 und die zweite zu 413. Beispielsweise kann ein zweiter Anstieg zeitlich nach dem Knick identisch sein zur Abnahme der Intensität 414 der Lumineszenz-Strahlung des zweiten aktiven Materials 320. Es versteht sich, dass der Knick kein scharfer Knick sein muss, wie schematisch in Figur 4B dargestellt ist, sondern auch ein Knickbereich sein kann. Im Knickbereich kann sich die Steigung von dem ersten Anstieg in den zweiten Anstieg ändern (z.B. zumindest teilweise kontinuierlich, stetig, etc.), wobei die Änderung nicht abrupt ist. Der zeitliche Verlauf der Intensität der gemischten Lumineszenz-Strahlung kann von einem Anregungsmischungsverhältnis der jeweiligen angeregten aktiven Materialien abhängig sein. Beispielsweise kann dies zu einer bestimmten Charakteristik führen, die während eines ersten bestimmten Zeitintervalls mittels einer schnell abfallende Intensität einer Strahlung dargestellt werden kann, und die während eines zweiten (vom ersten verschiedenen) bestimmten zeitlichen Intervalls mittels einer langsamer als im ersten bestimmten Zeitintervall abfallenden Intensität der Strahlung dargestellt werden kann.

Im Allgemeinen kann dies zu einem bestimmten Verhältnis von Emissionsbanden von aktiven Materialien innerhalb des Funktionselements 110 führen. Dieses Verhältnis kann beispielsweise von der optoelektronischen Detektoreinheit 120 (z.B. in Form einer Photodiode) zeitabhängig ausgelesen werden. Dieses Verhältnis kann beispielsweise von der optoelektronischen Detektoreinheit 120 (z.B. in Form eines spektral sensitiven Photodetektors) detektiert (z.B. identifiziert) werden.

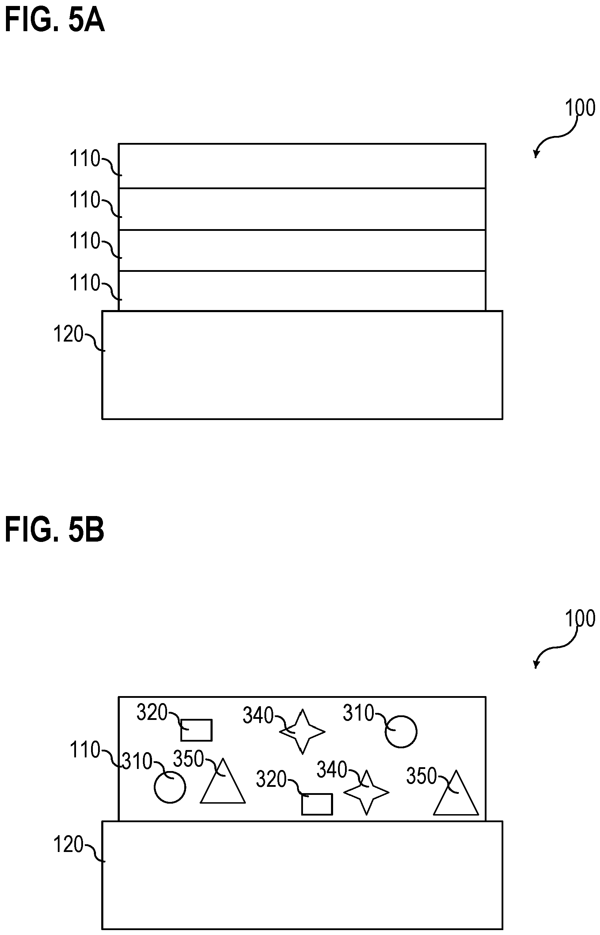

Hierin werden beispielhaft verschiedene Aspekte eines Funktionselements 100 beschrieben. In Figur 5A ist ein optoelektronischer Detektor 100 aufweisend mehrere Funktionselementen 110 dargestellt. Es versteht sich, dass voneinander verschiedene Funktionselementen, unterschiedlich voneinander oder gleich zueinander ausgestaltet sein können. Beispielsweise können ein erstes Funktionselement 110 der mehreren Funktionselemente 110 und ein zweites Funktionselement 110 der mehreren Funktionselemente 110 bezüglich ihrer Zusammensetzung (z.B. bezüglich ihrer Inhaltsstoffe, einem prozentualen Anteil der Inhaltsstoffe, einem Herstellungsprozess etc.) gleich ausgestaltet sein. Beispielsweise können ein erstes Funktionselement 110 der mehreren Funktionselemente 110 und ein zweites Funktionselement 110 der mehreren Funktionselemente 110 bezüglich ihrer Zusammensetzung (z.B. bezüglich ihrer Inhaltsstoffe, einem prozentualen Anteil der Inhaltsstoffe, einem Herstellungsprozess etc.) verschiedenen voneinander ausgestaltet sein. Beispielsweise kann ein erstes Funktionselement 110 der mehreren Funktionselemente ein oder mehrere aktive Materialien aufweisen oder aus diesen bestehen, die ein zweites Funktionselement 110 der mehreren Funktionselemente 110 nicht aufweist.

Gemäß verschiedenen Aspekten kann das Funktionselement 110 des optoelektronischen Detektors 100 zwei oder mehrere aktive Materialien aufweisen. Es versteht sich, dass das bisher beschriebene erste und zweite aktive Material 310, 320 nur als beispielhaft zur Erklärung des Funktionsprinzips des optoelektronischen Detektors 100 zu verstehen ist.

In **Figur 5B** ist ein optoelektronische Detektor 100 gemäß verschiedenen Aspekten dargestellt, der mehrere aktive Materialien aufweist. Beispielsweise kann der optoelektronische Detektor 100 gemäß verschiedenen Aspekten ein erstes aktives Material 310, ein zweites aktives Material 320, ein drittes aktives Material 330, und ein viertes aktives Material 340 aufweisen. Die Auswahl und/oder Anzahl der gewählten aktiven Materialien kann beispielsweise auf einen konkreten Anwendungsfall angepasst sein (z.B. die (z.B. vermuteten oder erwarteten) Wellenlängen der zu detektierenden elektromagnetischen Strahlung).

Beispielsweise können aktive Materialien kurze Abklingzeiten (bzw. kleine Zerfallskonstanten) haben. Beispielsweise können aktive Materialien lange Abklingzeiten (bzw. große Zerfallskonstanten) haben. Beispielsweise kann eine Abklingzeit eines Materials mit einer langen Abklingzeit eine Abklingzeit haben, die um mehr als einen Faktor 2 (z.B. um mehr als Faktor 5, 10, 20, 50, 100, 200, 500, 1000, 10000, oder mehr als 100000) größer ist als eine Abklingzeit eines Materials, das eine kurze Abklingzeit hat. Vorzugsweise können die Absorptionsempfindlichkeiten (bzw. Absorptionsspektren) und/oder die Emissionsspektren von Materialien, die kurze Abklingzeiten haben, und Materialien, die lange Abklingzeiten haben, spektral gegeneinander verschoben sein.

Beispielsweise können aktive Materialien ein oder mehrere intensive Absorptionsbanden aufweisen. Beispielsweise kann die Intensität der Strahlung aller Wellenlängen innerhalb einer intensiven Absorptionsbande stärker reduziert werden als außerhalb der intensiven Absorptionsbande (z.B. um mehr als 50%, 60%, 70%, 80%, 100%, 500% oder um mehr als 1000%). Beispielsweise kann eine intensive Absorptionsbande ein lokales Maximum einer Absorptionsempfindlichkeit oder ein Bereich um das lokale Maximum der Absorptionsempfindlichkeit herum sein, z.B. der Bereich in dem die Absorptionsempfindlichkeit größer ist als 70% (z.B. größer als 75%, 80%, 85%, 90%, 95% oder größer als 98%) des lokalen Maximums.

Beispielsweise können aktive Materialien eine hohe Quantenausbeute der Lumineszenz haben (z.B. eine Quantenausbeute von mehr als 0,1 (z.B. mehr als 0,1, 0,2, 0,3, 0,4, 0,5, 0,6, 0,7, 0,8, oder mehr als 0,9). Beispielsweise können aktive Materialien gut prozessierbar sein (z.B. können sie geeignet sein, mittels thermischen Verdampfens prozessiert zu werden und/oder mittels (z.B. chemischen) Nassprozessen prozessiert zu werden. Beispielsweise können aktive Materialien ein gutes Einbettungsverhalten in Wirtsmaterialien haben. Beispielsweise können die Materialien derart in ein Wirtsmaterial eingebettet werden, dass die aktiven Materialien nicht aus dem Wirtsmaterial herausdiffundieren. Beispielsweise können aktive Materialien eine gute Lagerstabilität und/oder eine Lumineszenz-Stabilität über einen vorgegebenen Zeitraum haben. Beispielsweise können sich die Lumineszenz-Eigenschaften eines aktiven Materials um weniger als 20% (z.B. weniger als 10%, 5%, weniger als 1%) während eines Zeitraums von mehr als einem Tag (z.B. mehr als 7 Tage, mehr als 30 Tage, mehr als 100 Tage, mehr als 365 Tage oder mehr als 730 Tage) verändern. Beispielsweise weisen aktive Materialien eine hohe Linearität in der Lumineszenz z.B. bezüglich einer absorbierten Energie und/oder eines Wellenlängenspektrums (z.B. einer emittierten und/oder absorbierten Strahlung) auf. Als hohe Linearität wird beispielsweise verstanden, dass die Intensität der Lumineszenz über einen großen Bereich linear ist. Beispielsweise kann die Intensität der Lumineszenz über einen großen Bereich der absorbierten Energie linear sein, z.B. einem Bereich mit einer Breite von mehr als 10 mJ und weniger als 50 mJ, oder mehr als 50 mJ und weniger als 100 mJ, oder mehr als 100 mJ und weniger als 500 mJ, oder mehr als 500 mJ und weniger als 1 J, oder mehr als 1 J und weniger als 10 J, oder mehr als 10 J und weniger als 100 J. Beispielsweise kann die Intensität der Lumineszenz über einen großen Bereich eines Wellenlängenspektrums(z.B. einer emittierten und/oder absorbierten Strahlung) linear sein, z.B. einem Bereich mit einer Breite von mehr als 10 nm und weniger als 50 nm, oder mehr als 50 nm und weniger als 100 nm, oder mehr als 100 nm und weniger als 500 nm, oder mehr als 500 nm und weniger als 1 µm, oder mehr als 1 µm und weniger als 10 µm.

Beispielsweise können Materialien für kurze Zerfallskonstanten (d.h. für kurze Intensitäts-Zerfallskonstanten) sein: Fluoreszierende Moleküle (z.B. DCJTB [4-(dicyanomethylene)-2-tert-butyl-6-(1,1,7,7-tetramethyljulolidyl-9-enyl)-4H-pyran], DBP [5,10,15,20-Tetraphenylbisbenz[5,6]indeno[1,2,3-cd:1',2',3'-lm]perylene]; Rubren [5,6,11,12-Tetraphenylnaphthacene]), (z.B. organische, anorganische oder hybride) Quantenmaterialien (z.B. Karbonquantenpunkte, Perowskitquantenpunkte, und/oder Quantenkörper (z.B. Quantenpunkten, Quantenplättchenn), die beispielsweise aufweisen können: CdSe/CdS, CdSe/ZnS, CdTe/CdS, CdSe/SiO2, CdS/SiO2), anorganische Halbleiter (z.B. GaAs, GaN, InGaN, AlGaAs, GaAsP, AlInGaP), und/oder Atome (z.B. He, Ne, Hg).

Beispielsweise können Materialien für lange Zerfallskonstanten (d.h. für lange Intensitäts-Zerfallskonstanten) sein: organische Halbleiter, die Phosphoreszenz zeigen (z.B. BP-2TA [4,4'-Dithianthren-1-yl-benzophenon], NPB [N,N'-di(naphtha-1-yl)-N,N'-diphenyl-benzidine], PtOEP [Platin(II)-2,3,7,8,12,13,17,18-octaethyl-21H,23H-porphyrin], Ir(ppy)3 [Iridium-tris-[2-(2-pyridinyl-κN)-phenyl-κC]], TPD [N,N'-Bis(3-methylphenyl)-N,N'-diphenylbenzidine], PhenDpa [N3,N3,N8',N8'-tetraphenyl-1,10-phenanthroline-3,8-diamine], BF2HPhN [9-((difluoroboran-eyl)oxy)-1H-phenalen-1-one], Coronene), und/oder organische Halbleiter, die thermisch aktivierte Fluoreszenz zeigen (z.B. 4CzIPN [1,2,3,5-Tetrakis(carbazol-9-yl)-4,6-dicyanobenzene, 2,4,5,6-Tetrakis(9H-carbazol-9-yl) isophthalonitrile], DMAC-DPS [10,10'-(4,4'-Sulfonylbis(4,1-phenylene))bis(9,9-dimethyl-9,10-dihydroacridine)], PPF [2,8-Bis(diphenylphosphineoxide)dibenzofuran]), und/oder organische Donor-Akzeptor Systeme, die mindestens zwei Moleküle aufweisen, zwischen denen sich ein Ladungstransferzustand ausbilden kann (z.B. m-MTDATA [4,4',4"-Tris[phenyl(m-tolyl)amino]triphenylamine]:BPhen [4,7-Diphenyl-1,10-phenanthrolin], TCTA [Tris-(4-carbazoyl-9-yl-phenyl)-amine]:TPBi [2,2',2-(1,3,5-Benzinetriyl)-tris(1-phenyl-1-H-benzimidazole)], m-MTDATA:TPBi), und/oder anorganische Phosphore (z.B. Sr2Si5N8:Eu2+, SrSi2O2N2:Eu2+, YAG:Ce3+, (Y,Gd)BO3:Eu3+), und/oder Karbonquantenpunkte.

Gemäß verschiedenen Aspekten können Energietransferprozesse zwischen aktiven Materialien (die z.B. auch als Farbstoffe bezeichnet werden können) innerhalb des Funktionselements 110 stattfinden. Diese können die charakteristische Antwort der ein oder mehreren Funktionselement 110 stören. Daher sollten das Funktionselement 110 vorzugsweise Materialien (z.B. aktive Materialien, Wirtsmaterialien) aufweisen, zwischen denen der Energietransfer unterdrückt ist.

Es versteht sich, dass die hierin beschriebenen Aspekte auch miteinander kombiniert werden können. Beispielsweise können die Aspekte die in den Figuren 5A und 5B dargestellt sind, miteinander kombiniert werden. Beispielsweise, kann ein erstes Funktionselement 110 eines optoelektronische Detektors 100 ein erstes aktives Material 310 und ein zweites Material 320 aufweisen. Beispielsweise kann ein zweites Funktionselement 110 des optoelektronischen Detektors 100 ein drittes aktives Material 330 und ein viertes aktives Material 340 aufweisen. Somit können beispielsweise Wechselwirkungen der aktiven Materialien untereinander reduziert werden.

Beispielsweise kann eine optoelektronische Detektoreinheit 120 eines optoelektronischen Detektors 100 gemäß verschiedenen Aspekten ein oder mehrere Sensoren (oder Sensorbereiche) aufweisen. Beispielsweise kann die optoelektronische Detektoreinheit 120 eingerichtet sein, dass ein erster Sensor der ein oder mehreren Sensoren ein oder mehrere erste Wellenlängen detektieren kann. Beispielsweise kann die optoelektronische Detektoreinheit 120 eingerichtet sein, dass ein zweiter Sensor der ein oder mehreren Sensoren ein oder mehrere zweite Wellenlängen detektieren kann. Beispielsweise kann die optoelektronische Detektoreinheit 120 derart eingerichtet sein, dass der erste Sensor nicht die ein oder mehreren zweiten Wellenlängen detektieren kann. Beispielsweise kann die optoelektronische Detektoreinheit 120 ein oder mehrere Filter aufweisen. Beispielsweise kann der erste Sensor mittels eines ersten Filters der ein oder mehreren Filter abgeschirmt sein, der eingerichtet ist die ein oder mehreren ersten Wellenlängen zu transmittieren (z.B. mit einer Intensität von mehr als 30%, 40%, 50%, 60%, 70%, 80%, 90%, 95% oder mehr als 99%). Der zweite Sensor kann mittels eines analogen zweiten Filters der ein oder mehreren Filter bezüglich der ein oder mehreren zweiten Wellenlängen abgeschirmt sein. Beispielsweise können der erste Sensor und der zweite Sensor auch körperlich voneinander getrennt sein. Beispielsweise können der erste Sensor und der zweite Sensor durch eine elektrische Isolierung und/oder eine optische Isolierung voneinander getrennt sein. Beispielsweise kann die elektrische Isolierung und/oder eine optische Isolierung mittels ein oder mehrere Isolierelemente (z.B. Isolierschichten) ausgestaltet sein. Es versteht sich, dass dieses Prinzip auch auf mehr als 2 Sensoren übertragen werden kann. Somit kann beispielsweise ein günstiges und einfach handhabbares Spektrometer bereitgestellt werden.

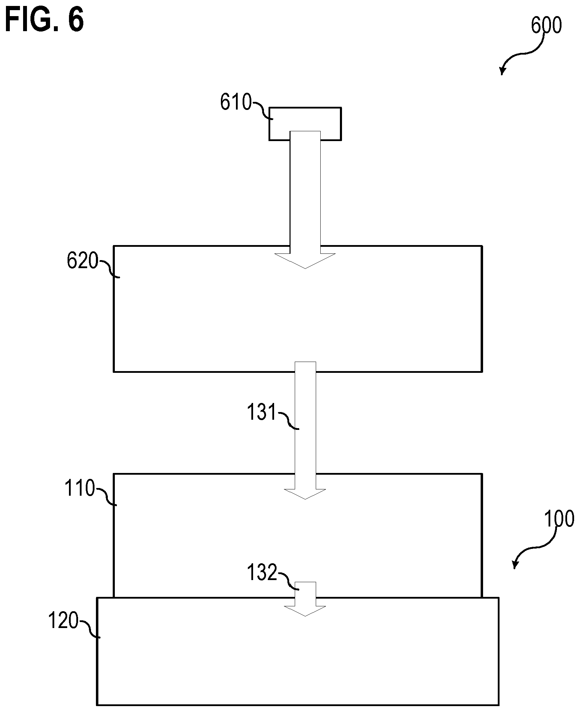

Beispielsweise kann ein optoelektronische Detektor 100 gemäß verschiedenen Aspekten verwendet werden, um Sicherheitsmerkmale zu überprüfen. **Figur 6** zeigt beispielsweise eine optoelektronische Detektorvorrichtung 600 zum Verifizieren eines Sicherheitsmerkmals gemäß verschiedenen Aspekten. Beispielsweise kann ein Sicherheitsmerkmal ein Emissionsmaterial aufweisen oder aus diesem bestehen.

Beispielsweise kann ein Emissionsmaterial ein aktives Material oder eine eindeutige Mischung von mehreren aktiven Materialien aufweisen oder daraus bestehen. Beispielsweise kann ein Prüffarbstoff ein Emissionsmaterial aufweisen oder sein. Somit kann der Prüffarbstoff eine Lumineszenz-Strahlung emittieren, die ein eindeutiges Emissionswellenlängenspektrum aufweist, das dem jeweiligen Prüffarbstoff zugeordnet werden kann.

Die optoelektronische Detektorvorrichtung 600 kann ein Anregungselement (z.B. eine Strahlungsquelle, eine Wärmequelle, eine Spannungsquelle, eine Stromquelle etc.) 610 aufweisen. Mittels des Anregungselements kann ein Emissionsmaterial 620, z.B. der Prüffarbstoff, angeregt, z.B. mittels Bestrahlung, werden zu lumineszieren.

Die vom Prüffarbstoff emittierte Lumineszenz-Strahlung 131 kann eine zu prüfende elektromagnetische Strahlung, wie zuvor beschrieben, sein.

Die optoelektronische Detektorvorrichtung 600 kann ferner einen optoelektronischen Detektor 100 gemäß verschiedenen Aspekten aufweisen. Innerhalb des optoelektronischen Detektors 100 kann die vom Prüffarbstoff emittierte Lumineszenz-Strahlung 131 von dem Funktionselement 110 absorbiert werden und eine charakteristische Antwort des Funktionselements 110 hervorrufen. Die charakteristische Antwort des Funktionselements 110 kann mittels der optoelektronischen Detektoreinheit 120 detektiert werden.

Die charakteristische Antwort des Funktionselements 110 kann beispielsweise ein charakteristisches Abklingverhalten einer Intensität einer von dem Funktionselement 110 emittierten Lumineszenz-Strahlung 132 sein. Beispielsweise kann die charakteristische Antwort von ein oder mehreren im Prüffarbstoff verwendeten Materialien bzw. deren Mischungsverhältnis abhängen. Die charakteristische Antwort kann eine Identifikation des Prüffarbstoffes ermöglichen. Beispielsweise ermöglicht die charakteristische Antwort einen Plagiatsschutz, bei dem ein Vorhandensein des Prüffarbstoffes verifiziert oder falsifiziert werden kann.

Beispielsweise kann der optoelektronische Detektor 100 verwendet werden, um eine Emissionswellenlänge einer zu prüfenden monochromen Lichtquelle (z.B. eines Lasers) zu ermitteln. In diesem Beispiel ist die von der monochromen Lichtquelle emittierte Strahlung eine zu detektierende monochrome elektromagnetische Strahlung, die das Funktionselement 110 des optoelektronischen Detektors 100 gemäß verschiedenen Aspekten anregen kann.

Aufgrund der Anregung kann in dem Funktionselement 110 eine charakteristische Antwort hervorgerufen werden, die die zu detektierende monochrome elektromagnetische Strahlung repräsentieren kann. Beispielsweise kann das Funktionselement 110 eine Lumineszenz-Strahlung emittieren. Beispielsweise kann ein charakteristisches Abklingverhalten einer Intensität der von dem Funktionselement 110 emittierten Lumineszenz-Strahlung die Wellenlänge der zu detektierenden monochromen elektromagnetischen Strahlung repräsentieren. Beispielsweise kann ein Wellenlängenspektrum der von dem Funktionselement 110 emittierten Lumineszenz-Strahlung die Wellenlänge der zu detektierenden monochromen elektromagnetischen Strahlung repräsentieren. Es versteht sich, dass das Funktionselement 110 ein oder mehrere aktive Materialien aufweisen kann, die die charakteristische Antwort des Funktionselements beeinflussen oder hervorrufen können.

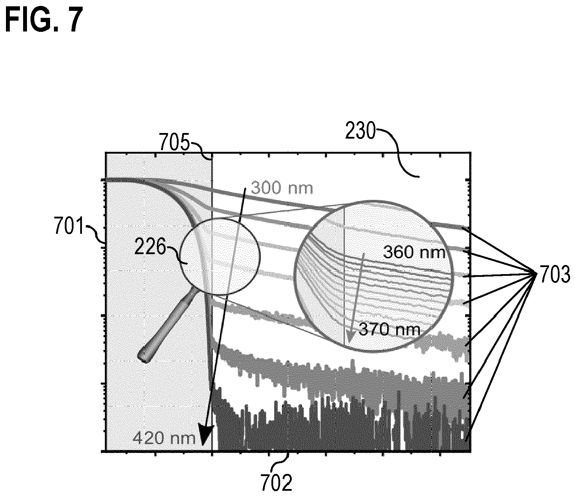

Für derartige Messungen von monochromatischen elektromagnetischen Strahlungen mittels eines optoelektronischen Detektors 100 gemäß verschiedenen Aspekten, sind in **Figur 7** mehrere gemessene Intensitäts-Zeitkurven eines Funktionselements 110 beispielhaft dargestellt. Die vertikale Achse 701 stellt die Intensität der von dem Funktionselement emittierten Lumineszenz-Strahlung dar. Die horizontale Achse repräsentiert die Zeit nach einem Stoppen der Bestrahlung mit der zu detektierenden elektromagnetischen Strahlung. Die Kurven 703 repräsentieren eine jeweilige Intensität der von dem Funktionselement 110 emittierten Lumineszenz-Strahlung. Zum Zeitpunkt 705 ist ein deutlicher Knick in allen Kurven 704 zu erkennen. Das in diesem Beispiel verwendete Funktionselement weist zwei aktive Materialien mit voneinander verschiedenen Abklingzeiten auf. Demzufolge kann in den Intensitäten jeweils ein Knick erkannt werden, der einen Zeitpunkt repräsentiert, an dem das aktive Material mit der kürzeren (z.B. kurzen) Abklingzeit abgeklungen ist, und nur noch das Material mit der längeren (z.B. langen) Abklingzeit luminesziert.

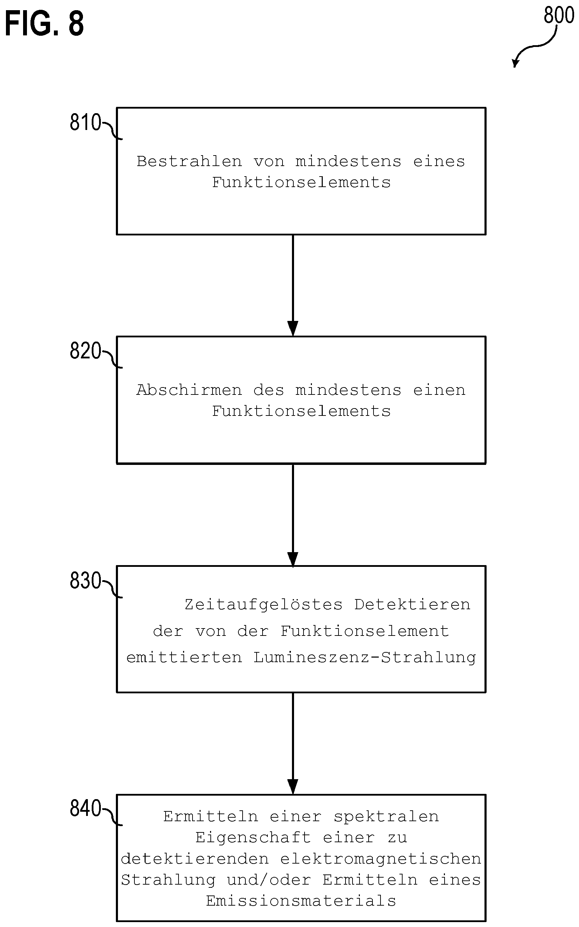

In **Figur 8** ist ein Verfahren 800 zum Detektieren einer elektromagnetischen Strahlung mittels eines optoelektronischen Detektors 100 gemäß verschiedenen Aspekten dargestellt. In einem ersten Schritt 810 können ein oder mehrere Funktionselemente bestrahlt werden. In einem zweiten Schritt 820 können die ein oder mehreren Funktionselemente von der Strahlung abgeschirmt werden. Beispielsweise kann eine Strahlungsquelle der elektromagnetischen Strahlung entfernt, ausgeschaltet und/oder abgedeckt werden. In einem dritten Schritt 830 kann ein zeitabhängiges Abklingverhalten einer Intensität einer von dem Funktionselement emittierten Lumineszenz-Strahlung detektiert werden. In einem zusätzlichen optionalen Schritt 840 können eine oder mehrere spektrale Eigenschaften einer zu detektierenden elektromagnetischen Strahlung ermittelt und/oder ein (Nicht-)Vorhandensein eines Emissionsmaterials überprüft werden.

Gemäß verschiedenen Aspekten wird ein optoelektronische Detektor bereitgestellt. Der optoelektronische Detektor gemäß verschiedenen Aspekten, kann eingerichtet sein, ein spektrales Signal (z.B. eine zu detektierende elektromagnetische Strahlung) in ein Anregungsmischungsverhältnis umzuwandeln. Das Anregungsmischungsverhältnis kann verwendet werden, um eine Wellenlänge einer monochromatischen Strahlung und/oder einen Prüffarbstoff eindeutig zu identifizieren. Das Anregungsmischungsverhältnis kann eine Zeitabhängigkeit haben. Die Zeitabhängigkeit des Anregungsmischungsverhältnis kann mittels eines optoelektronischen Detektors 100 (z.B. in Form einer Photodiode) ermittelt werden. Das Anregungsmischungsverhältnis kann ein bestimmtes Wellenlängenspektrum haben. Das Wellenlängenspektrum des Anregungsmischungsverhältnis kann mittels eines optoelektronischen Detektors 100 (z.B. in Form eines wellenlängensensitiven Detektors) ermittelt werden.

Beispiel 1 ist ein optoelektronischer Detektor, der aufweisen kann: mindestens ein Funktionselement, welches eingerichtet ist, eine zu detektierende elektromagnetische Strahlung zu absorbieren und eine Lumineszenz-Strahlung derart zu emittieren, dass eine Intensität der emittierten Lumineszenz-Strahlung ein zeitabhängiges Abklingverhalten aufweist, und dass das zeitabhängige Abklingverhalten eine spektrale Eigenschaft einer zu detektierenden elektromagnetischen Strahlung repräsentiert; und eine optoelektronische Detektoreinheit, welche eingerichtet ist das zeitabhängige Abklingverhalten der Intensität der von dem Funktionselement emittierten Lumineszenz-Strahlung zu ermitteln zum Ermitteln der spektralen Eigenschaft einer zu detektierenden elektromagnetischen Strahlung und/oder zum Ermitteln eines Emissionsmaterials, welches eine zu detektierende elektromagnetische Strahlung emittiert.

Es versteht sich, dass das mindestens eine Funktionselement als mindestens ein Sensorelement zum Detektieren der zu detektierenden elektromagnetische Strahlung verstanden wird. Dabei kann die zu detektierende elektromagnetische Strahlung ein oder mehrere unbekannte Strahlungseigenschaften (z.B. ein unbekanntes Wellenlängenspektrum) haben, wobei das Sensorelement und eine Auswertevorrichtung (z.B. als Teil der Detektorvorrichtung oder als Teil der Detektoreinheit) verwendet werden kann, um die ein oder mehreren unbekannten Strahlungseigenschaften zu detektieren und zu analysieren.

Gemäß verschiedenen Aspekten kann das Funktionselement als funktionaler Teil der optoelektronischen Detektoreinheit verstanden werden, da mittels des Funktionselements eine zu detektierende elektromagnetische Strahlung in eine effizienter detektierbare physikalische Größe (z.B. in ein Zeitverhalten) umgewandelt wird.

Beispiel 2 ist ein optoelektronischer Detektor gemäß Beispiel 1, wobei die spektrale Eigenschaft ein Vorliegen oder ein Nichtvorliegen mindestens einer spezifischen Wellenlänge bzw. mindestens einer spezifischen Frequenz in der zu detektierenden elektromagnetischen Strahlung sein kann.

Beispiel 3 ist ein optoelektronischer Detektor gemäß Beispiel 1 oder 2, wobei die spektrale Eigenschaft ein spezifisches Emissionsmaterial, welches die zu detektierende elektromagnetische Strahlung emittiert, repräsentieren kann.

Beispielsweise kann somit ein Vergleich des ermittelten zeitabhängigen Abklingverhaltens der Intensität mit ein oder mehreren zeitabhängigen Referenz-Abklingverhalten der Intensitäten erfolgen. Beispielsweise kann ein zeitabhängiges Referenz-Abklingverhalten der Intensität eine spezifische Wellenlänge der zu detektierenden elektromagnetischen Strahlung oder ein spezifisches Wellenlängenspektrum der zu detektierenden elektromagnetischen Strahlung repräsentieren. Beispielsweise kann ein zeitabhängiges Referenz-Abklingverhalten der Intensität ein spezifisches Emissionsmaterial, welches die zu detektierende elektromagnetische Strahlung emittiert, repräsentieren.

Beispiel 4 ist ein optoelektronischer Detektor gemäß einem der Beispiele 1 bis 3, wobei das mindestens eine Funktionselement als zeitlicher Intensitätsintegrator bezüglich der zu detektierenden elektromagnetischen Strahlung eingerichtet sein kann.

Beispiel 5 ist ein optoelektronischer Detektor gemäß einem der Beispiele 1 bis 4, wobei das mindestens eine Funktionselement eingerichtet sein kann, wahlweise in einen Anregungszustand (z.B. einen stationären Zustand) oder einen Abklingzustand gebracht zu werden zum Ermitteln des zeitabhängigen Abklingverhaltens der Intensität, während die Schicht in dem Abklingzustand ist.

Beispiel 6 ist ein optoelektronischer Detektor gemäß einem der Beispiele 1 bis 5, wobei das mindestens eine Funktionselement eingerichtet sein kann, mittels Bestrahlung durch die zu detektierende elektromagnetische Strahlung in den Anregungszustand gebracht werden zu können, und wobei das mindestens eine Funktionselement eingerichtet sein kann, dass das mindestens eine Funktionselement von der zu detektierenden elektromagnetischen Strahlung abgeschirmt werden kann, um das mindestens eine Funktionselement aus dem Anregungszustand in den Abklingzustand zu bringen.

Beispiel 7 ist ein optoelektronischer Detektor gemäß einem der Beispiele 1 bis 6, der ferner optional aufweisen kann: eine Abschirmeinheit (z.B. einen Shutter) zum Abschirmen des mindestens einen Funktionselements von der zu detektierenden elektromagnetischen Strahlung.

Beispiel 8 ist ein optoelektronischer Detektor gemäß einem der Beispiele 1 bis 7, wobei das mindestens eine Funktionselement ein erstes lumineszierendes Material zum emittieren einer ersten Lumineszenz-Strahlung und ein zweites lumineszierendes Material zum emittieren einer zweiten Lumineszenz-Strahlung aufweisen kann, wobei das erste lumineszierende Material und das zweite lumineszierende Material verschieden voneinander sind; oder wobei das mindestens eine Funktionselement eine Vielzahl von voneinander verschiedenen lumineszierenden Materialien aufweisen kann zum Emittieren einer entsprechenden Vielzahl von Lumineszenz-Strahlungen.

Dadurch kann beispielsweise eine charakteristische Antwort des mindestens einen Funktionselement generiert werden, die eine erste charakteristische Antwort des ersten lumineszierenden Materials und eine zweite charakteristische Antwort des zweiten lumineszierenden Materials aufweist.

Beispiel 9 ist ein optoelektronischer Detektor gemäß Beispiel 8, wobei das erste lumineszierende Material und das zweite lumineszierende Material bezüglich einer wellenlängenabhängigen Absorptionscharakteristik der eingestrahlten zu detektierenden elektromagnetischen Strahlung verschieden voneinander sein können; oder wobei die Vielzahl von voneinander verschiedenen lumineszierenden Materialen bezüglich deren jeweiliger wellenlängenabhängigen Absorptionscharakteristik der eingestrahlten zu detektierenden elektromagnetischen Strahlung verschieden voneinander sein können.

Beispiel 10 ist ein optoelektronischer Detektor gemäß Beispiel 8 oder 9, wobei das erste lumineszierende Material und das zweite lumineszierende Material bezüglich einer zeitabhängigen Emissionscharakteristik der ersten emittierten Lumineszenz-Strahlung und einer zeitabhängigen Emissionscharakteristik der zweiten emittierten Lumineszenz-Strahlung verschieden voneinander sein können; wobei die lumineszierenden Materialien der Vielzahl der lumineszierenden Materialien bezüglich einer jeweiligen zeitabhängigen Emissionscharakteristik der entsprechenden emittierten Lumineszenz-Strahlung verschieden voneinander sein können.

Beispiel 11 ist ein optoelektronischer Detektor gemäß Beispiel 10, wobei die zeitabhängige Emissionscharakteristik der ersten emittierten Lumineszenz-Strahlung ein zeitabhängiges Abklingen einer Intensität der ersten emittierten Lumineszenz-Strahlung sein kann und die zeitabhängige Emissionscharakteristik der zweiten emittierten Lumineszenz-Strahlung ein zeitabhängiges Abklingen einer Intensität der zweiten emittierten Lumineszenz-Strahlung sein kann; oder wobei die zeitabhängige Emissionscharakteristik der entsprechenden emittierten Lumineszenz-Strahlung ein zeitabhängiges Abklingen einer Intensität der entsprechenden emittierten Lumineszenz-Strahlung sein kann.

Beispiel 12 ist ein optoelektronischer Detektor gemäß einem der Beispiele 8 bis 11, wobei ein Emissions-Wellenlängenspektrum der ersten emittierten Lumineszenz-Strahlung verschieden von einem Wellenlängenspektrum der zweiten emittierten Lumineszenz-Strahlung sein kann in einem Detektionsbereich der optoelektronischen Detektoreinheit; oder wobei die Emissions-Wellenlängenspektren der entsprechenden emittierten Lumineszenz-Strahlungen verschieden voneinander sein können in einem Detektionsbereich der optoelektronischen Detektoreinheit.

Beispiel 13 ist ein optoelektronischer Detektor gemäß Beispiel 12, wobei die optoelektronische Detektoreinheit einen ersten sensitiven Bereich zum Detektieren der ersten emittierten Lumineszenz-Strahlung und einen zweiten sensitiven Bereich zum Detektieren der zweiten emittierten Lumineszenz-Strahlung aufweisen kann; oder wobei die optoelektronische Detektoreinheit einen jeweiligen sensitiven Bereich zum Detektieren der entsprechenden Lumineszenz-Strahlung aufweisen kann.

Beispiel 14 ist ein optoelektronischer Detektor gemäß Beispiel 13, wobei der erste sensitive Bereich mittels eines ersten Filters von der zweiten emittierten Lumineszenz-Strahlung abgeschirmt sein kann (z.B. zu mehr als 90%, 95%, 99%), und wobei der zweite sensitive Bereich mittels eines zweiten Filters von der ersten emittierten Lumineszenz-Strahlung abgeschirmt sein kann (z.B. zu mehr als 90%, 95%, 99%); oder wobei der jeweilige sensitive Bereich mittels eines entsprechenden Filters von Strahlung abgeschirmt sein kann (z.B. zu mehr als 90%, 95%, 99%), die Wellenlängen aufweist, die nicht zum Wellenlängen-Spektrum der entsprechenden Lumineszenz-Strahlung gehören.

Beispielsweise kann der erste Filter durchlässig (z.B. zu mehr als 50%, 60%, 70%, 80% oder zu mehr als 90%) für die erste emittierte Lumineszenz-Strahlung und der zweite Filter durchlässig (z.B. zu mehr als 50%, 60%, 70%, 80% oder zu mehr als 90%) für die zweite emittierte Lumineszenz-Strahlung sein.

Beispiel 15 ist ein optoelektronischer Detektor gemäß einem der Beispiele 8 bis 14, wobei ein Verhältnis einer Intensität der ersten Lumineszenz-Strahlung und einer Intensität der zweiten Lumineszenz-Strahlung, die spektrale Eigenschaft einer zu detektierenden elektromagnetischen Strahlung repräsentieren kann.

Beispiel 16 ist ein optoelektronischer Detektor gemäß einem der Beispiele 8 bis 15, wobei das erstes lumineszierende Material eine erste Intensitäts-Zerfallskonstante aufweist, und wobei das zweite lumineszierende Material ein Material eine zweite Intensitäts-Zerfallskonstante aufweist, wobei die erste Intensitäts-Zerfallskonstante verschieden von der zweiten Intensitäts-Zerfallskonstante ist,
wobei vorzugsweise die erste Intensitäts-Zerfallskonstante kleiner ist als die zweite Intensitäts-Zerfallskonstante.

Beispiel 17 ist ein optoelektronischer Detektor gemäß Beispiel 16 , wobei das erstes lumineszierende Material ein oder mehrere der folgenden aufweist (z.B. ist):
ein oder mehrere fluoreszierende Moleküle, wie beispielsweise: DCJTB [4-(dicyanomethylene)-2-tert-butyl-6-(1,1,7,7-tetramethyljulolidyl-9-enyl)-4H-pyran]; DBP [5,10,15,20-Tetraphenylbisbenz[5,6]indeno[1,2,3-cd:1',2',3'-lm]perylene], Rubren [5,6,11,12-Tetraphenylnaphthacene], und/oder
ein oder mehrere Quantenmaterialien (z.B. Karbonquantenpunkte, Perowskitquantenpunkte, Quantenkörper (z.B. Quantenpunkte, Quantenplättchenn), wobei die Quantenkörper beispielsweise aufweisen können: CdSe/CdS, CdSe/ZnS, CdTe/CdS, CdSe/SiO2, CdS/SiO2)),
ein oder mehrere anorganische Halbleiter (z.B. GaAs, GaN, InGaN, AlGaAs, GaAsP, AlInGaP).

Beispiel 18 ist ein optoelektronischer Detektor gemäß Beispiel 16 oder 17, wobei das zweite lumineszierende Material ein oder mehrere der folgenden aufweist (z.B. ist):
organische Halbleiter, die Phosphoreszenz zeigen, wie beispielsweise BP-2TA [4,4'-Dithianthren-1-yl-benzophenon], NPB [N,N'-di(naphtha-1-yl)-N,N'-diphenyl-benzidine], PtOEP [Platin(II)-2,3,7,8,12,13,17,18-octaethyl-21H,23H-porphyrin], Ir(ppy)3 [Iridium-tris-[2-(2-pyridinyl-κN)-phenyl-κC]], TPD [N,N'-Bis(3-methylphenyl)-N,N'-diphenylbenzidine], PhenDpa [N3,N3,N8`,N8`-tetraphenyl-1,10-phenanthroline-3,8-diamine], BF2HPhN [9-((difluoroboran-eyl)oxy)-1H-phenalen-1-one], Coronene, und/oder
organische Halbleiter, die thermisch aktivierte Fluoreszenz zeigen, wie beispielsweise 4CzIPN [1,2,3,5-Tetrakis(carbazol-9-yl)-4,6-dicyanobenzene, 2,4,5,6-Tetrakis(9H-carbazol-9-yl) isophthalonitrile], DMAC-DPS [10,10'-(4,4'-Sulfonylbis(4,1-phenylene))bis(9,9-dimethyl-9,10-dihydroacridine)], PPF [2,8-Bis(diphenylphosphineoxide)dibenzofuran], und/oder
organische Donor-Akzeptor Systeme, die mindestens zwei Moleküle aufweisen, zwischen denen sich ein Ladungstransferzustand ausbilden kann, wie beispielsweise m-MTDATA [4,4',4"-Tris[phenyl(m-tolyl)amino]triphenylamine]:BPhen [4,7-Diphenyl-1,10-phenanthrolin], TCTA [Tris-(4-carbazoyl-9-yl-phenyl)-amine]:TPBi [2,2',2-(1,3,5-Benzinetriyl)-tris(1-phenyl-1-H-benzimidazole)], m-MTDATA:TPBi, und/oder
anorganische Phosphore, wie beispielsweise Sr2Si5N8:Eu2+, SrSi2O2N2:Eu2+, YAG:Ce3+, (Y,Gd)BO3:Eu3+, und/oder
Karbonquantenpunkte.

Beispiel 19 ist ein optoelektronischer Detektor gemäß einem der Beispiele 1 bis 18, wobei das mindestens eine Funktionselement, ferner eingerichtet ist, um eine erste zu detektierende Strahlung von einer zweiten zu detektierenden Strahlung zu unterscheiden.

Beispiel 20 ist ein optoelektronischer Detektor, der aufweisen kann: mindestens ein Funktionselement eingerichtet zum Empfangen einer zu detektierenden elektromagnetischen Strahlung, wobei das mindestens eine Funktionselement ein erstes lumineszierendes Material und ein zweites lumineszierendes Material aufweist, wobei das erste lumineszierende Material eine erste wellenlängenabhängige Absorptionscharakteristik aufweist und wobei das zweite lumineszierende Material eine zweite wellenlängenabhängige Absorptionscharakteristik aufweist die verschieden ist von der ersten wellenlängenabhängigen Absorptionscharakteristik, und wobei das erste lumineszierende Material eine erste zeitabhängige Emissionscharakteristik (bzw. eine erste charakteristische Antwort, z.B. ein erstes Intensitäts-Abklingverhalten in einem ersten Emissionswellenlängenbereich) aufweist und wobei das zweite lumineszierende Material eine zweite zeitabhängige Emissionscharakteristik (bzw. eine zweite charakteristische Antwort, z.B. ein zweites Intensitäts-Abklingverhalten in einem zweiten Emissionswellenlängenbereich) aufweist die verschieden ist von der ersten zeitabhängigen Emissionscharakteristik, eine optoelektronische Detektoreinheit eingerichtet zum Detektieren einer Intensität von elektromagnetischer Strahlung, die von dem ersten lumineszierenden Material und dem zweiten lumineszierenden Material emittiert wird in Antwort auf eine Bestrahlung des ersten lumineszierenden Materials und des zweiten lumineszierenden Materials mit der zu detektierenden elektromagnetischen Strahlung, wobei eine Zeitabhängigkeit der detektierten Intensität eine spektrale Eigenschaft der zu detektierenden elektromagnetischen Strahlung repräsentiert.

Beispiel 21 ist ein Optoelektronischer Detektor, der aufweisen kann: mindestens ein Funktionselement eingerichtet zum Empfangen einer zu detektierenden elektromagnetischen Strahlung, wobei das mindestens eine Funktionselement ein erstes lumineszierendes Material und ein zweites lumineszierendes Material aufweist, wobei das erste lumineszierende Material eine erste wellenlängenabhängige Absorptionscharakteristik aufweist und wobei das zweite lumineszierende Material eine zweite wellenlängenabhängige Absorptionscharakteristik aufweist die verschieden ist von der ersten wellenlängenabhängigen Absorptionscharakteristik, und wobei das erste lumineszierende Material eine erste zeitabhängige Emissionscharakteristik aufweist und wobei das zweite lumineszierende Material eine zweite zeitabhängige Emissionscharakteristik aufweist die verschieden ist von der ersten zeitabhängigen Emissionscharakteristik, eine optoelektronische Detektoreinheit eingerichtet zum Ermitteln einer Zeitabhängigkeit der Intensität von re-emittierter elektromagnetischer Strahlung, die von dem ersten lumineszierenden Material und dem zweiten lumineszierenden Material emittiert werden kann in Antwort auf eine Bestrahlung des ersten lumineszierenden Materials und des zweiten lumineszierenden Materials mit der zu detektierenden elektromagnetischen Strahlung, wobei die Zeitabhängigkeit der Intensität der re-emittierten elektromagnetischen Strahlung eine spektrale Eigenschaft der zu detektierenden elektromagnetischen Strahlung repräsentiert.

Beispiel 22 ist ein optoelektronischer Detektor, der aufweisen kann: mindestens ein Funktionselement, welches eingerichtet ist, eine zu detektierende elektromagnetische Strahlung zu absorbieren und eine Lumineszenz-Strahlung derart zu emittieren, dass die emittierte Lumineszenz-Strahlung einen ersten Strahlungs-Anteil aufweisend ein oder mehrere erste Wellenlängen und einen zweiten Strahlungs-Anteil aufweisend ein oder mehrere zweite Wellenlängen aufweist, wobei die ein oder mehreren ersten Wellenlängen verschieden von den ein oder mehreren zweiten Wellenlängen sind, wobei ein Verhältnis einer Intensität des ersten Strahlungs-Anteils und einer Intensität des zweiten Strahlungs-Anteils eine spektrale Eigenschaft einer zu detektierenden elektromagnetischen Strahlung repräsentiert; eine optoelektronische Detektoreinheit, welche eingerichtet ist die Intensität des ersten Strahlungs-Anteils und die Intensität des zweiten Strahlungs-Anteils gleichzeitig aber separat voneinander zu ermitteln zum Ermitteln der spektralen Eigenschaft einer zu detektierenden elektromagnetischen Strahlung und/oder zum Ermitteln eines Emissionsmaterials, welches eine zu detektierende elektromagnetische Strahlung emittiert.

Beispiel 23 ist ein optoelektronischer Detektor gemäß Beispiel 22, wobei die optoelektronische Detektoreinheit einen ersten Sensor zum Ermitteln der Intensität des ersten Strahlungs-Anteils und einen zweiten Sensor zum Ermitteln der Intensität des zweiten Strahlungs-Anteils aufweisen kann.

Es versteht sich, dass die Ausgestaltungen und die Merkmale, die in den Beispielen 1 bis 19 beschrieben wurden, in analoger Weise auf die optoelektronischen Detektoren gemäß der Beispiele 20 bis 23 übertragen werden können.

Beispiel 24 ist eine optoelektronische Detektorvorrichtung, die aufweisen kann: zumindest einen optoelektronischen Detektor gemäß einem der Beispiele 1 bis 23; und ein Anregungselement zum Anregen eines Emissionsmaterials, welches eingerichtet ist, die zu detektierende elektromagnetische Strahlung zu emittieren, wobei das Anregungselement vorzugsweise eingerichtet ist, Ein- und Ausgeschaltet zu werden, um einen Anregungszustand bzw. einen Abklingzustand des Emissionsmaterials zu erzeugen.

Beispiel 25 ist ein Verwenden eines optoelektronischen Detektors gemäß einem der Beispiele 1 bis 23 oder der optoelektronischen Detektorvorrichtung gemäß Beispiel 24 zum Erkennen oder zum Charakterisieren einer spezifischen zu detektierenden elektromagnetischen Strahlung und/oder zum Erkennen oder zum Charakterisieren eines spezifischen Materials, welches die zu detektierenden elektromagnetischen Strahlung emittiert.

Beispiel 26 ist ein Verwenden gemäß Beispiel 25, wobei die emittierte elektromagnetische Strahlung von einem Sicherheitsmerkmal emittiert werden kann, und wobei vorzugsweise das Sicherheitsmerkmal an und/oder in einem zu identifizierenden und/oder zu authentifizierenden Objekt angebracht sein kann.

Beispiel 27 ist ein Verfahren zum Detektieren einer elektromagnetischen Strahlung, das Verfahren kann aufweisen: Bestrahlen von mindestens einem Funktionselement, welches eingerichtet ist, eine zu detektierende elektromagnetische Strahlung zu absorbieren und als Antwort auf das Absorbieren einer zu detektierenden elektromagnetischen Strahlung eine Lumineszenz-Strahlung derart zu emittieren, dass eine Intensität der emittierten Lumineszenz-Strahlung ein zeitabhängiges Abklingverhalten aufweist, und das zeitabhängige Abklingverhalten eine spektrale Eigenschaft einer zu detektierenden elektromagnetischen Strahlung repräsentiert; Abschirmen des mindestens einen Funktionselements von einer zu detektierenden elektromagnetischen Strahlung; und Zeitaufgelöstes Detektieren der von dem Funktionselement emittierten Lumineszenz-Strahlung.

Beispiel 28 ist ein Verfahren gemäß Beispiel 27, das ferner optional aufweisen kann: Ermitteln von ein oder mehrerer spektraler Eigenschaften der zu detektierenden elektromagnetischen Strahlung und/oder Überprüfen eines (Nicht-)Vorhandenseins eines Emissionsmaterials.

Formale Anmerkung: ein Projekt, das zu dieser Anmeldung geführt hat, wurde vom Europäischen Forschungsrat (ERC) im Rahmen des Forschungs- und Innovationsprogramms Horizont 2020 der Europäischen Union gefördert (Fördervereinbarung Nr. 679213).

## Patentansprüche

1. Optoelektronischer Detektor (100) aufweisend:
mindestens ein Funktionselement (110), welches eingerichtet ist, eine zu detektierende elektromagnetische Strahlung (131) zu absorbieren und eine Lumineszenz-Strahlung (132) derart zu emittieren, dass eine Intensität der emittierten Lumineszenz-Strahlung (132) ein zeitabhängiges Abklingverhalten aufweist, und dass das zeitabhängige Abklingverhalten eine spektrale Eigenschaft einer zu detektierenden elektromagnetischen Strahlung (131) repräsentiert; und
eine optoelektronische Detektoreinheit (120), welche eingerichtet ist das zeitabhängige Abklingverhalten der Intensität der von dem Funktionselement (110) emittierten Lumineszenz-Strahlung (132) zu ermitteln zum Ermitteln der spektralen Eigenschaft einer zu detektierenden elektromagnetischen Strahlung (131) und/oder zum Ermitteln eines Emissionsmaterials, welches eine zu detektierende elektromagnetische Strahlung (131) emittiert.

2. Optoelektronischer Detektor (100) gemäß Anspruch 1,
wobei die spektrale Eigenschaft ein Vorliegen oder ein Nichtvorliegen mindestens einer spezifischen Wellenlänge bzw. mindestens einer spezifischen Frequenz in der zu detektierenden elektromagnetischen Strahlung (131) ist, und/oder
wobei die spektrale Eigenschaft ein spezifisches Emissionsmaterial, welches die zu detektierende elektromagnetische Strahlung (131) emittiert, repräsentiert.

3. Optoelektronischer Detektor (100) gemäß einem der Ansprüche 1 oder 2,
wobei das mindestens eine Funktionselement (110) als zeitlicher Intensitätsintegrator bezüglich der zu detektierenden elektromagnetischen Strahlung (131) eingerichtet ist.

4. Optoelektronischer Detektor (100) gemäß einem der Ansprüche 1 bis 3,
wobei das mindestens eine Funktionselement (110) eingerichtet ist, wahlweise in einen Anregungszustand oder einen Abklingzustand gebracht zu werden zum Ermitteln des zeitabhängigen Abklingverhaltens der Intensität, während die Schicht in dem Abklingzustand ist.

5. Optoelektronischer Detektor (100) gemäß einem der Ansprüche 1 bis 4,
wobei das mindestens eine Funktionselement (110) eingerichtet ist, mittels Bestrahlung durch die zu detektierende elektromagnetische Strahlung (131) in den Anregungszustand gebracht zu werden, und
wobei das mindestens eine Funktionselement (110) eingerichtet ist, dass das mindestens eine Funktionselement (110) von der zu detektierenden elektromagnetischen Strahlung (131) abgeschirmt werden kann, um das mindestens eine Funktionselement (110) aus dem Anregungszustand in den Abklingzustand zu bringen.

6. Optoelektronischer Detektor (100) gemäß einem der Ansprüche 1 bis 5 ferner aufweisend:
eine Abschirmeinheit (210) zum Abschirmen des mindestens einen Funktionselements (110) von der zu detektierenden elektromagnetischen Strahlung (131).

7. Optoelektronischer Detektor (100) gemäß einem der Ansprüche 1 bis 6,
wobei das mindestens eine Funktionselement (110) ein erstes lumineszierendes Material (310) zum emittieren einer ersten Lumineszenz-Strahlung (132) und ein zweites lumineszierendes Material (320) zum emittieren einer zweiten Lumineszenz-Strahlung (132) aufweist, wobei das erste lumineszierende Material (310) und das zweite lumineszierende Material (320) verschieden voneinander sind; oder
wobei das mindestens eine Funktionselement (110) eine Vielzahl von voneinander verschiedenen lumineszierenden Materialen (310, 320, 330, 340) aufweist zum Emittieren einer entsprechenden Vielzahl von Lumineszenz-Strahlungen (132).

8. Optoelektronischer Detektor (100) gemäß Anspruch 7,
wobei das erste lumineszierende Material (310) und das zweite lumineszierende Material (320) bezüglich einer wellenlängenabhängigen Absorptionscharakteristik der eingestrahlten zu detektierenden elektromagnetischen Strahlung (131) verschieden voneinander sind; oder
wobei die Vielzahl von voneinander verschiedenen lumineszierenden Materialen (310, 320, 330, 340) bezüglich deren jeweiliger wellenlängenabhängigen Absorptionscharakteristik der eingestrahlten zu detektierenden elektromagnetischen Strahlung (131) verschieden voneinander sind.

9. Optoelektronischer Detektor (100) gemäß Anspruch 7 oder 8,
wobei das erste lumineszierende Material (310) und das zweite lumineszierende Material (320) bezüglich einer zeitabhängigen Emissionscharakteristik der ersten emittierten Lumineszenz-Strahlung (132) und einer zeitabhängigen Emissionscharakteristik der zweiten emittierten Lumineszenz-Strahlung (132) verschieden voneinander sind; oder wobei die lumineszierenden Materialien der Vielzahl der lumineszierenden Materialien (310, 320, 330, 340) einer jeweiligen zeitabhängigen Emissionscharakteristik der entsprechenden emittierten Lumineszenz-Strahlung (132) verschieden voneinander sind; und
entweder wobei vorzugsweise die zeitabhängige Emissionscharakteristik der ersten emittierten Lumineszenz-Strahlung (132) ein zeitabhängiges Abklingen einer Intensität der ersten emittierten Lumineszenz-Strahlung (132) ist und die zeitabhängige Emissionscharakteristik der zweiten emittierten Lumineszenz-Strahlung (132) ein zeitabhängiges Abklingen einer Intensität der zweiten emittierten Lumineszenz-Strahlung (132) ist, oder
wobei vorzugsweise die zeitabhängige Emissionscharakteristik der entsprechenden emittierten Lumineszenz-Strahlung (132) ein zeitabhängiges Abklingen einer Intensität der entsprechenden emittierten Lumineszenz-Strahlung (132) ist.

10. Optoelektronischer Detektor (100) gemäß einem der Ansprüche 7 bis 9,
wobei ein Emissions-Wellenlängenspektrum der ersten emittierten Lumineszenz-Strahlung (132) verschieden von einem Wellenlängenspektrum der zweiten emittierten Lumineszenz-Strahlung (132) ist in einem Detektionsbereich der optoelektronischen Detektoreinheit (120); oder
oder wobei die Emissions-Wellenlängenspektren der entsprechenden emittierten Lumineszenz-Strahlungen verschieden voneinander sind in einem Detektionsbereich der optoelektronischen Detektoreinheit (120).

11. Optoelektronischer Detektor (100) gemäß Anspruch 10,
wobei die optoelektronische Detektoreinheit (120) einen ersten sensitiven Bereich zum Detektieren der ersten emittierten Lumineszenz-Strahlung (132) und einen zweiten sensitiven Bereich zum Detektieren der zweiten emittierten Lumineszenz-Strahlung (132) aufweist; oder
oder wobei die optoelektronische Detektoreinheit (120) einen jeweiligen sensitiven Bereich zum Detektieren der entsprechenden Lumineszenz-Strahlung (132) aufweist, und
wobei vorzugsweise der erste sensitive Bereich mittels eines ersten Filters von der zweiten emittierten Lumineszenz-Strahlung (132) abgeschirmt ist, und der zweite sensitive Bereich mittels eines zweiten Filters von der ersten emittierten Lumineszenz-Strahlung (132) abgeschirmt ist; oder wobei der jeweilige sensitive Bereich mittels eines entsprechenden Filters von Strahlung abgeschirmt ist, die Wellenlängen aufweist, die nicht zum Wellenlängen-Spektrum der entsprechenden Lumineszenz-Strahlung (132) gehören.

12. Optoelektronischer Detektor (100) gemäß einem der Ansprüche 7 bis 11,
wobei ein Verhältnis einer Intensität der ersten Lumineszenz-Strahlung (132) und einer Intensität der zweiten Lumineszenz-Strahlung (132), die spektrale Eigenschaft einer zu detektierenden elektromagnetischen Strahlung (131) repräsentiert.

13. Optoelektronische Detektorvorrichtung (600) aufweisend:
Zumindest einen optoelektronischen Detektor (100) gemäß einem der Ansprüche 1 bis 12, und
ein Anregungselement (610) zum Anregen eines Emissionsmaterials (620), welches eingerichtet ist, die zu detektierende elektromagnetische Strahlung (131) zu emittieren
wobei das Anregungselement vorzugsweise eingerichtet ist, Ein- und Ausgeschaltet zu werden, um einen Anregungszustand bzw. einen Abklingzustand des Emissionsmaterials zu erzeugen.

14. Verwenden eines optoelektronischen Detektors (100) gemäß einem der Ansprüche 1 bis 12 oder der optoelektronischen Detektorvorrichtung (600) gemäß Anspruch 13 zum Erkennen einer spezifischen zu detektierenden elektromagnetischen Strahlung (131) und/oder zum Erkennen eines spezifischen Materials, welches die zu detektierenden elektromagnetischen Strahlung (131) emittiert

15. Verfahren zum Detektieren einer elektromagnetischen Strahlung, das Verfahren aufweisend:
Bestrahlen von mindestens einem Funktionselement (110), welches eingerichtet ist, eine zu detektierende elektromagnetische Strahlung (131) zu absorbieren und als Antwort auf das Absorbieren einer zu detektierenden elektromagnetischen Strahlung (131) eine Lumineszenz-Strahlung (132) derart zu emittieren, dass eine Intensität der emittierten Lumineszenz-Strahlung (132) ein zeitabhängiges Abklingverhalten aufweist, und das zeitabhängige Abklingverhalten eine spektrale Eigenschaft einer zu detektierenden elektromagnetischen Strahlung (131) repräsentiert;
Abschirmen des mindestens einen Funktionselements (110) von einer zu detektierenden elektromagnetischen Strahlung (131); und
Zeitaufgelöstes Detektieren der von dem Funktionselement (110) emittierten Lumineszenz-Strahlung (132).
